(19) Europäisches Patentamt
European Patent Office
Office européen des brevets

(11) **EP 4 718 289 A1**

(12) **EUROPEAN PATENT APPLICATION**
published in accordance with Art. 153(4) EPC

(43) Date of publication:
01.04.2026 Bulletin 2026/14

(21) Application number: 24824952.6

(22) Date of filing: 25.03.2024

(51) International Patent Classification (IPC):
*G06F 17/16* (2006.01)  *G06N 3/02* (2006.01)

(52) Cooperative Patent Classification (CPC):
G06F 17/16; G06N 3/02

(86) International application number:
PCT/CN2024/083524

(87) International publication number:
WO 2024/260050 (26.12.2024 Gazette 2024/52)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 21.06.2023 CN 202310746599

(71) Applicant: Huawei Technologies Co., Ltd.
Shenzhen, Guangdong 518129 (CN)

(72) Inventors:
• BAI, Youhui
Shenzhen, Guangdong 518129 (CN)

• WANG, Sen
Shenzhen, Guangdong 518129 (CN)
• ZHOU, Huaman
Shenzhen, Guangdong 518129 (CN)
• TANG, Yifeng
Shenzhen, Guangdong 518129 (CN)
• ZHANG, Gong
Shenzhen, Guangdong 518129 (CN)
• FU, Yong
Shenzhen, Guangdong 518129 (CN)
• LI, Fuhua
Shenzhen, Guangdong 518129 (CN)

(74) Representative: Körber, Martin Hans et al
Mitscherlich PartmbB
Karlstraße 7
80333 München (DE)

(54) **DATA PROCESSING METHOD AND RELATED DEVICE**

(57) A data processing method and a related device are disclosed, to improve utilization of a matrix computation unit in an intelligent chip, improve vector-type operation efficiency, and further improve a throughput of the intelligent chip. The method includes: after a vector operator is obtained, determining whether the vector operator is capable of being converted into an equivalent matrix multiplication operator; and converting the vector operator into a corresponding target matrix multiplication operator if the vector operator is capable of being converted into the equivalent matrix multiplication operator, so that the matrix computation unit in the intelligent chip can execute the target matrix multiplication operator, thereby improving overall operation efficiency of the intelligent chip.

FIG. 5

## Description

This application claims priority to Chinese Patent Application No. 202310746599.2, filed with the China National Intellectual Property Administration on June 21, 2023 and entitled "DATA PROCESSING METHOD AND RELATED DEVICE", which is incorporated herein by reference in its entirety.

## TECHNICAL FIELD

This application relates to the field of artificial intelligence technologies, and in particular, to a data processing method and a related device.

## BACKGROUND

In the context of big data and big computing, artificial intelligence technologies represented by machine learning develop rapidly, become a core foundation of key technologies such as computer vision, an intelligent voice, natural language processing, biometric feature recognition, and a recommendation system, are widely applied to fields such as financial risk control, medical diagnosis, and smart city, and gradually become one of major forces that promote information revolution and social development. Rapid development of artificial intelligence is attributed to two important factors: innovation of an algorithm model and continuous improvement of a computing capability of an intelligent chip.

In the post-Moore era, although chip transistor density still continues to increase, it is very difficult to further improve power consumption density and performance density, which means that computational power cannot be improved through process improvement. Therefore, an important branch of chip development is a domain-specific architecture (domain-specific architecture, DSA), also referred to as an intelligent chip. This type of chip is strongly dedicated and easy to design. Based on a specific application feature, although universality and flexibility are sacrificed for customization of a computation unit, simplification of control logic, and a design of a storage structure and a data channel that adapt to a domain computing feature, high performance and an energy efficiency ratio are achieved, and the chip is widely applied to fields such as high-performance computing, artificial intelligence, and cryptography. A core computation unit of the intelligent chip includes two parts: a matrix computation unit, configured to perform matrix multiplication computation; and a vector computation unit, configured to accelerate a vector-type operation.

A design core of the intelligent chip is to accelerate a matrix multiplication operation. Therefore, the matrix computation unit occupies a large area on the intelligent chip. Compared with computational power of the vector computation unit, computational power of the matrix computation unit is improved by magnitude. For example, in some intelligent chips, a computational power ratio of the matrix computation unit to the vector computation unit reaches 100: 1. However, computation of a neural network model is usually performed alternately on the two independent computation units. Consequently, vector-type computing with low computing complexity and a low computational power requirement becomes a bottleneck that restricts computational power of the intelligent chip.

## SUMMARY

This application provides a data processing method and a related device, to resolve a problem that weak computational power of a vector computation unit of an intelligent chip restricts computational power of the intelligent chip.

According to a first aspect, a data processing method is provided. The method includes: determining whether a vector operator meets a condition; and when the vector operator meets the condition, converting the vector operator into a target matrix multiplication operator that is capable of being executed by a matrix computation unit of a chip. The vector operator is an operator executed by a vector computation unit of the chip. A first computation result of the target matrix multiplication operator is the same as a second computation result of the vector operator. In other words, the target matrix multiplication operator is an equivalent operator of the vector operator, and a computation result before conversion of the vector operator is consistent with a computation result after conversion of the vector operator. When the vector operator meets the condition, the vector operator is converted into the target matrix multiplication operator, that is, the vector operator is converted into a data format that can be processed by the matrix computation unit, so that the converted target matrix multiplication operator can be operated on the matrix computation unit, thereby accelerating a vector-type operation and improving reasoning efficiency of a neural network model.

In a possible implementation, determining whether the vector operator meets the condition includes: determining whether the vector operator is a target vector operator; and determining, if the vector operator is the target vector operator, that the vector operator meets the condition; or determining, if the vector operator is not the target vector operator, that the vector operator does not meet the condition. The target vector operator is an operator that is capable of being converted into a matrix multiplication operator, and a computation result of the target vector operator is the same as a computation result of the converted matrix multiplication operator. In this way, it is ensured that the vector operator is capable of being converted into the matrix multiplication operator, and it is ensured that computation of the converted target matrix multiplication operator is consistent with the computation result of the vector operator.

In a possible implementation, determining whether the vector operator meets the condition further includes: determining whether a first cost is less than a second cost. The first cost is predicted duration required for executing, by the matrix computation unit, the target matrix multiplication operator to complete computation, and the second cost is predicted duration required for executing, by the vector computation unit, the vector operator to complete computation. Determining, if the vector operator is the target vector operator, that the vector operator meets the condition includes: if the vector operator is the target vector operator and the first cost is less than the second cost, determining that the vector operator meets the condition. Therefore, time overheads required by the matrix computation unit and time overheads required by the vector computation unit are predicted and compared, to ensure that computation is finally performed in a manner with smallest time overheads, thereby optimizing processing efficiency of an intelligent chip.

In a possible implementation, the target vector operator includes at least one of row-wise matrix summation, column-wise matrix summation, scalar-matrix multiplication, a vector outer product operation, and a Hadamard product operation between a matrix and a vector.

In a possible implementation, the target matrix multiplication operator includes a constructed matrix, and the constructed matrix is a matrix that is constructed based on the vector operator and that makes the first computation result and the second computation result the same.

In a possible implementation, the chip includes a buffer connected to the matrix computation unit, the buffer is configured to store a block matrix of the constructed matrix, and converting the vector operator into the target matrix multiplication operator includes: constructing a target block matrix based on a size of the buffer and the vector operator, where a size of the target block matrix is less than or equal to the size of the buffer, the target block matrix is a part of the constructed matrix, and not all values in the target block matrix are 0. Therefore, there is no need to construct a complete constructed matrix. In this way, occupation of storage space is reduced, invalid operations are reduced, and data migration overheads are reduced, thereby improving processing efficiency of the matrix computation unit.

In a possible implementation, the matrix computation unit includes at least one multiplication accumulator, and the multiplication accumulator is configured to compute matrix multiplication between matrices of a preset size. The size of the target block matrix is an integer multiple (greater than or equal to 1) of the preset size.

According to a second aspect, a data processing method is provided. The method is applied to a chip, and the chip includes a vector computation unit and a matrix computation unit. The method includes: obtaining a target vector operator; converting the target vector operator into a target matrix multiplication operator; and executing the target matrix multiplication operator by using the matrix computation unit. A first computation result of the target matrix multiplication operator is the same as a second computation result of the target vector operator. The target vector operator is an operator that is capable of being converted into a matrix multiplication operator, and a computation result of the converted matrix multiplication operator is the same as a computation result of the vector operator.

In a possible implementation, the target matrix multiplication operator includes a constructed matrix, and the constructed matrix is a matrix that is constructed based on the target vector operator and that makes the first computation result and the second computation result the same.

In a possible implementation, the chip includes a buffer connected to the matrix computation unit, the buffer is configured to store a block matrix of the constructed matrix, and converting the target vector operator into the target matrix multiplication operator includes: constructing a target block matrix based on a size of the buffer and the target vector operator, where a size of the target block matrix is less than or equal to the size of the buffer, the target block matrix is a part of the constructed matrix, and not all values in the target block matrix are 0.

According to a third aspect, a data processing method is provided. The method is applied to a host central processing unit. The method includes: determining whether a vector operator meets a condition, and sending an instruction if the vector operator meets the condition. The instruction instructs a chip to convert the vector operator into a matrix multiplication operator. The vector operator is an operator executed by a vector computation unit of the chip.

In a possible implementation, determining whether the vector operator meets the condition includes: determining whether the vector operator is a target vector operator; and determining, if the vector operator is the target vector operator, that the vector operator meets the condition. The target vector operator is an operator that is capable of being converted into a matrix multiplication operator, and a computation result of the target vector operator is the same as a computation result of the converted matrix multiplication operator.

In a possible implementation, determining whether the vector operator meets the condition further includes: determining whether a first cost is less than a second cost, where the first cost is predicted duration required for executing, by the matrix computation unit, the target matrix multiplication operator to complete computation, and the second cost is predicted duration required for executing, by the vector computation unit, the vector operator to complete computation. Determining, if the vector operator is the target vector operator, that the vector operator meets the condition includes: if the vector operator is the target vector operator and the first cost is less than the second cost, determining that the vector operator meets the condition.

In a possible implementation, the target vector operator includes at least one of row-wise matrix summation, column-wise matrix summation, scalar-matrix multiplication, a vector outer product operation, and a Hadamard product operation between a matrix and a vector.

According to a fourth aspect, an apparatus is provided. The apparatus includes a first processing module and a second processing module. The first processing module is configured to determine whether a vector operator meets a condition. The vector operator is an operator executed by a vector computation unit of a chip. The second processing module is configured to convert the vector operator into a target matrix multiplication operator if the vector operator meets the condition, so that a matrix computation unit of the chip is capable of executing the target matrix multiplication operator. A first computation result of the target matrix multiplication operator is the same as a second computation result of the vector operator.

In a possible implementation, the first processing module is configured to determine whether the vector operator is a target vector operator. The target vector operator is an operator that is capable of being converted into a matrix multiplication operator, and a computation result of the converted matrix multiplication operator is the same as a computation result of the vector operator. The first processing module is configured to determine, if the vector operator is the target vector operator, that the vector operator meets the condition.

In a possible implementation, the target vector operator includes at least one of row-wise matrix summation, column-wise matrix summation, scalar-matrix multiplication, a vector outer product operation, and a Hadamard product operation between a matrix and a vector.

In a possible implementation, the first processing module is configured to determine whether a first cost is less than a second cost. The first cost is predicted duration required for executing, by the matrix computation unit, the target matrix multiplication operator to complete computation, and the second cost is predicted duration required for executing, by the vector computation unit, the vector operator to complete computation. The first processing module is configured to: when the vector operator is the target vector operator and the first cost is less than the second cost, determine that the vector operator meets the condition.

In a possible implementation, the target matrix multiplication operator includes a constructed matrix, and the constructed matrix is a matrix that is constructed based on the vector operator and that makes the first computation result and the second computation result the same. The chip includes a buffer connected to the matrix computation unit, the buffer is configured to store a block matrix of the constructed matrix. The second processing module is configured to construct a target block matrix based on a size of the buffer and the vector operator. A size of the target block matrix is less than or equal to the size of the buffer, the target block matrix is a part of the constructed matrix, and not all values in the target block matrix are 0.

According to a fifth aspect, an apparatus is provided. The apparatus is applied to a chip, the chip includes a vector computation unit and a matrix computation unit, and the apparatus includes a processing module. The processing module is configured to obtain a target vector operator. The processing module is configured to convert the target vector operator into a target matrix multiplication operator, so that the matrix computation unit is capable of executing the target matrix multiplication operator. A first computation result of the target matrix multiplication operator is the same as a second computation result of the target vector operator.

In a possible implementation, the target matrix multiplication operator includes a constructed matrix, and the constructed matrix is a matrix that is constructed based on the vector operator and that makes the first computation result and the second computation result the same. The chip includes a buffer connected to the matrix computation unit, the buffer is configured to store a block matrix of the constructed matrix. The processing module is configured to construct a target block matrix based on a size of the buffer and the vector operator. A size of the target block matrix is less than or equal to the size of the buffer, the target block matrix is a part of the constructed matrix, and not all values in the target block matrix are 0.

According to a sixth aspect, an apparatus is provided. The apparatus further includes a processing module. The processing module is configured to determine whether a vector operator meets a condition. The vector operator is an operator executed by a vector computation unit of a chip. The processing module is configured to send an instruction when the vector operator meets the condition. The instruction instructs the chip to convert the vector operator into a matrix multiplication operator.

In a possible implementation, the processing module is configured to determine whether the vector operator is a target vector operator. The target vector operator is an operator that is capable of being converted into a matrix multiplication operator, and a computation result of the target vector operator is the same as a computation result of the converted matrix multiplication operator. The processing module is configured to determine, if the vector operator is the target vector operator, that the vector operator meets the condition.

In a possible implementation, the target vector operator includes at least one of row-wise matrix summation, column-wise matrix summation, scalar-matrix multiplication, a vector outer product operation, and a Hadamard product operation between a matrix and a vector.

In a possible implementation, the processing module is configured to determine whether a first cost is less than a second cost. The first cost is predicted duration required for executing, by the matrix computation unit, the target matrix multiplication operator to complete computation, and the second cost is predicted duration required for executing, by the vector computation unit, the vector operator to complete computation. The processing module is configured to: when the vector operator is the target vector operator and the first cost is less than the second cost, determine that the vector operator meets the condition.

According to a seventh aspect, an electronic device is provided. The electronic device includes a processor, the processor is coupled to a memory, and the processor is configured to perform, based on instructions stored in the memory, the data processing method according to any one of the first aspect or the possible implementations of the first aspect, or any one of the second aspect or the possible implementations of the second aspect, or any one of the third aspect or the possible implementations of the third aspect.

According to an eighth aspect, a computer-readable storage medium is provided. The computer-readable storage medium includes instructions. When the computer-readable storage medium runs on a computer, the computer is enabled to perform the steps of the data processing method according to any one of the first aspect or the possible implementations of the first aspect, or any one of the second aspect or the possible implementations of the second aspect, or any one of the third aspect or the possible implementations of the third aspect.

## BRIEF DESCRIPTION OF DRAWINGS

FIG. 1 is a diagram of an architecture of an artificial intelligence chip;
FIG. 2 shows a hardware structure of a chip according to this application;
FIG. 3 is a diagram of a structure of a data processing system according to this application;
FIG. 4 is a diagram of a system architecture applied to this application;
FIG. 5 is a schematic flowchart of a data processing method according to this application;
FIG. 6a is a diagram of converting a vector operator into a corresponding target matrix multiplication operator according to this application;
FIG. 6b is another diagram of converting a vector operator into a corresponding target matrix multiplication operator according to this application;
FIG. 6c is another diagram of converting a vector operator into a corresponding target matrix multiplication operator according to this application;
FIG. 6d is another diagram of converting a vector operator into a corresponding target matrix multiplication operator according to this application;
FIG. 6e is another diagram of converting a vector operator into a corresponding target matrix multiplication operator according to this application;
FIG. 6f is another diagram of converting a vector operator into a corresponding target matrix multiplication operator according to this application;
FIG. 7 is a schematic flowchart of another data processing method according to this application;
FIG. 8 is a schematic flowchart of still another data processing method according to this application;
FIG. 9a shows a comparison between duration in which a vector computation unit completes an operation of a vector operator and duration in which a matrix computation unit completes an operation of a converted vector operator;
FIG. 9b shows another comparison between duration in which a vector computation unit completes an operation of a vector operator and duration in which a matrix computation unit completes an operation of a converted vector operator;
FIG. 9c shows still another comparison between duration in which a vector computation unit completes an operation of a vector operator and duration in which a matrix computation unit completes an operation of a converted vector operator;
FIG. 9d shows a gain of completing end-to-end reasoning of a neural network model based on a solution provided in this application;
FIG. 10 is a diagram of a structure of an apparatus according to this application;
FIG. 11 is a diagram of a structure of another apparatus according to this application;
FIG. 12 is a diagram of a structure of another apparatus according to this application; and
FIG. 13 is a diagram of a structure of an electronic device according to this application.

## DESCRIPTION OF EMBODIMENTS

This application provides a processing method and a related device, to improve utilization of a matrix computation unit in an intelligent chip, improve a throughput of the intelligent chip, and improve reasoning or training efficiency of a neural network model.

The following describes embodiments of this application with reference to the accompanying drawings. It is clear that the described embodiments are merely some rather than all of embodiments of this application. A person of ordinary skill in the art may know that with development of technologies and emergence of new scenarios, the technical solutions provided in embodiments of this application are also applicable to resolving similar technical problems.

In the specification, claims, and accompanying drawings of this application, the terms "first", "second", and so on are intended to distinguish between similar objects but do not necessarily indicate a specific order or sequence. "A plurality of" means that "greater or equal to two".

The specific term "example" herein means "used as an example, embodiment, or illustration". Any embodiment described as "example" is not necessarily explained as being superior or better than other embodiments.

To better explain the technical solutions of this application, the following describes related terms used in this application.

1. Operator (operator, OP for short)

In this application, the operator is an operation performed by a matrix multiplication computation unit or a vector computation unit in an AI chip. In other words, the operator in embodiments is a basic operation performed on an operation circuit of the AI chip. An operation performed by a matrix computation unit is referred to as a matrix multiplication operator, for example, matrix multiplication. An operation performed by the vector computation unit is collectively referred to as a vector operator. The vector operator includes, for example, an operation between vectors, an operation between a vector and a matrix, an operation between a vector and a scalar, an operation between a matrix and a scalar, and an operation such as vector/matrix reduce summation. The vector operator is not a matrix multiplication operator.

In embodiments, one layer in a neural network is referred to as a neural network operator, and one neural network operator may be obtained by combining one or more basic operations.

2. Matrix (matrix)

A matrix with a dimension of $m \times n$ is a rectangular array formed by arranging elements of m rows (row) and n columns (column). For example, a matrix A is shown in Formula (1), and a matrix B is shown in Formula (2).

$$A = \begin{bmatrix} a_{11} & a_{12} & ... & a_{1n} \\ a_{21} & a_{22} & ... & a_{2n} \\ ... & ... & ... & ... \\ a_{m1} & a_{m2} & ... & a_{mn} \end{bmatrix} \quad \text{Formula (1)}$$

3. Matrix multiplication

Two matrices can be multiplied only when a quantity of columns of a 1st matrix (a matrix on the left, referred to as a left matrix below) is the same as a quantity of rows of a 2nd matrix (a matrix on the right, referred to as a right matrix below). For example, the matrix $A=(a_{ij})$ is a matrix with a dimension of $m \times p$, and the matrix $B=(b_{ij})$ is a matrix with a dimension of $p \times n$. A product of the matrix A and the matrix B is defined as a matrix $C=(c_{ij})$ with a dimension of $m \times n$. An element $c_{ij}$ in an ith row and a jth column of the matrix $C=(c_{ij})$ is a sum of products of elements $a_{i1}, a_{i2}, ..., a_{ip}$ in an ith row of the matrix A and corresponding elements $b_{1j}, b_{2j}, ..., b_{pj}$ in a jth column of the matrix B, as shown in Formula (2).

$$c_{ij} = \sum_{k=1}^{p} a_{ik} b_{kj} = a_{i1} b_{1j} + a_{i1} b_{1j} + ... + a_{ip} b_{pj} \quad \text{Formula (2)}$$

Herein, $1 \leq i \leq m$, $1 \leq j \leq n$, and $1 \leq k \leq p$.

4. Row vector (row vector)

The row vector is a matrix whose dimension is $1 \times m$. Herein, m is a positive integer. For example, a row vector is shown in Formula (3).

$$X = \begin{bmatrix} x_1 & x_2 & ... & x_m \end{bmatrix} \qquad \text{Formula (3)}$$

5. Column vector (column vector)

The column vector is a matrix whose dimension is m× 1. Herein, m is a positive integer. For example, a column vector is shown in Formula (4).

$$X = \begin{bmatrix} x_1 \\ x_2 \\ ... \\ x_m \end{bmatrix} \qquad \text{Formula (4)}$$

6. Vector outer product (vector outer product)

A tensor product of two vectors is a matrix. For example, a column vector U with a dimension of $m \times 1$ and a row vector $V$ with a dimension of $1 \times n$ are given, an outer product $U \times V$ of the vector $U$ and the vector $V$ is defined as a matrix $D$ with a dimension of $m \times n$, and the matrix $D$ is shown in Formula (5).

$$D = U \otimes V = \begin{bmatrix} u_1 \\ u_2 \\ ... \\ u_m \end{bmatrix} \otimes \begin{bmatrix} v_1 & v_2 & ... & v_n \end{bmatrix} = \begin{bmatrix} u_1 v_1 & u_1 v_2 & ... & u_1 v_n \\ u_2 v_1 & u_2 v_2 & ... & u_2 v_n \\ ... & ... & ... & ... \\ u_m v_1 & u_m v_2 & ... & u_m v_n \end{bmatrix} \qquad \text{Formula (5)}$$

7. Row/Column-wise matrix summation

The row/column-wise matrix summation is a dimension reduction (reduction) operation. The row-wise matrix summation is to sum elements in each row of a matrix, to obtain a column vector. The column-wise matrix summation is to sum elements in each column of a matrix, to obtain a row vector. For example, row-wise summation is performed on a matrix A, to obtain a column vector C, as shown in Formula (6); and column-wise summation is performed on a matrix B, to obtain a row vector D, as shown in Formula (7).

$$A = \begin{bmatrix} a_{11} & a_{12} & ... & a_{1n} \\ a_{21} & a_{22} & ... & a_{2n} \\ ... & ... & ... & ... \\ a_{m1} & a_{m2} & ... & a_{mn} \end{bmatrix} \rightarrow C = \begin{bmatrix} a_{11} + a_{12} + ... + a_{1n} \\ a_{21} + a_{22} + ... + a_{2n} \\ ... \\ a_{m1} + a_{m2} + ... + a_{mn} \end{bmatrix} = \begin{bmatrix} c_1 \\ c_2 \\ ... \\ c_m \end{bmatrix} \qquad \text{Formula (6)}$$

$$B = \begin{bmatrix} b_{11} & b_{12} & ... & b_{1n} \\ b_{21} & b_{22} & ... & b_{2n} \\ ... & ... & ... & ... \\ b_{m1} & b_{m2} & ... & b_{mn} \end{bmatrix} \rightarrow$$

$$D = \begin{bmatrix} b_{11} + b_{21} + ... + b_{m1} & b_{12} + b_{22} ... + b_{m2} & ... & b_{1n} + b_{2n} + ... + b_{mn} \end{bmatrix} = \begin{bmatrix} d_1 & d_2 & ... & d_n \end{bmatrix}$$

Formula (7)

8. Hadamard product (Hadamard product)

The Hadamard product is an operation of multiplying elements at same positions in two matrices. A Hadamard product operation may be performed between two two-dimensional matrices, between a two-dimensional matrix and a row vector, or between a two-dimensional matrix and a column vector. The Hadamard product operation between two two-dimensional matrices requires that the two two-dimensional matrices have a same dimension. The Hadamard product operation between the two-dimensional matrix and the row vector requires that a quantity of columns of the two-dimensional matrix is the same as a quantity of columns of the row vector. The Hadamard product operation between the two-dimensional matrix and the column vector requires that a quantity of rows of the two-dimensional matrix be the same as a quantity of rows of the column vector. The Hadamard product operation between two two-dimensional matrices is shown in Formula (8). The Hadamard product operation between the two-dimensional matrix and the column vector is shown in Formula (9). The Hadamard product operation between the two-dimensional matrix and the row vector is shown in Formula (10).

$$C = A \odot B = \begin{bmatrix} a_{11} & a_{12} & \dots & a_{1n} \\ a_{21} & a_{22} & \dots & a_{2n} \\ \dots & \dots & \dots & \dots \\ a_{m1} & a_{m2} & \dots & a_{mn} \end{bmatrix} \odot \begin{bmatrix} b_{11} & b_{12} & \dots & b_{1n} \\ b_{21} & b_{22} & \dots & b_{2n} \\ \dots & \dots & \dots & \dots \\ b_{m1} & b_{m2} & \dots & b_{mn} \end{bmatrix} = \begin{bmatrix} a_{11}b_{11} & a_{12}b_{12} & \dots & a_{1n}b_{1n} \\ a_{21}b_{21} & a_{22}b_{22} & \dots & a_{2n}b_{2n} \\ \dots & \dots & \dots & \dots \\ a_{m1}b_{m1} & a_{m2}b_{m2} & \dots & a_{mn}b_{mn} \end{bmatrix}$$

Formula (8)

$$C = A \odot B = \begin{bmatrix} a_{11} & a_{12} & \dots & a_{1n} \\ a_{21} & a_{22} & \dots & a_{2n} \\ \dots & \dots & \dots & \dots \\ a_{m1} & a_{m2} & \dots & a_{mn} \end{bmatrix} \odot \begin{bmatrix} b_1 \\ b_1 \\ \dots \\ b_m \end{bmatrix} = \begin{bmatrix} a_{11}b_1 & a_{12}b_1 & \dots & a_{1n}b_1 \\ a_{21}b_2 & a_{22}b_2 & \dots & a_{2n}b_2 \\ \dots & \dots & \dots & \dots \\ a_{m1}b_m & a_{m2}b_m & \dots & a_{mn}b_m \end{bmatrix}$$

Formula (9)

$$C = A \odot B = \begin{bmatrix} a_{11} & a_{12} & \dots & a_{1n} \\ a_{21} & a_{22} & \dots & a_{2n} \\ \dots & \dots & \dots & \dots \\ a_{m1} & a_{m2} & \dots & a_{mn} \end{bmatrix} \odot \begin{bmatrix} b_1 & b_2 & \dots & b_n \end{bmatrix} = \begin{bmatrix} a_{11}b_1 & a_{12}b_2 & \dots & a_{1n}b_n \\ a_{21}b_1 & a_{22}b_2 & \dots & a_{2n}b_n \\ \dots & \dots & \dots & \dots \\ a_{m1}b_1 & a_{m2}b_2 & \dots & a_{mn}b_n \end{bmatrix}$$

Formula (10)

9. Scalar-matrix multiplication

Scalar-matrix multiplication is multiplying a matrix and a scalar (constant). The scalar-matrix multiplication is multiplying a constant s and all elements of a matrix A, an obtained matrix is referred to as scalar multiplication of a matrix, and is denoted as *sA* or *As,* as shown in Formula (11).

$$As = \begin{bmatrix} a_{11} & a_{12} & \dots & a_{1n} \\ a_{21} & a_{22} & \dots & a_{2n} \\ \dots & \dots & \dots & \dots \\ a_{m1} & a_{m2} & \dots & a_{mn} \end{bmatrix} s = \begin{bmatrix} a_{11}s & a_{12}s & \dots & a_{1n}s \\ a_{21}s & a_{22}s & \dots & a_{2n}s \\ \dots & \dots & \dots & \dots \\ a_{m1}s & a_{m2}s & \dots & a_{mn}s \end{bmatrix} \qquad \text{Formula (11)}$$

10. Block matrix

For a matrix A with a large quantity of rows and a large quantity of columns, during an operation, the matrix A is divided into several small matrices, each small matrix is referred to as a sub-block of A, and a matrix whose sub-block is in a form of an element is referred to as a block matrix. During an operation, these small matrices are considered as elements for processing, which can be simplified as a matrix multiplication operation. Sizes of block matrices may be the same or may be different. For example, a matrix is divided into block matrices, as shown in Formula (12), and a 4*4 matrix A may be divided into four 2*2 block matrices. Certainly, there may be another division manner, and the matrix A may alternatively have another dimension. This is merely used as an example herein.

$$A = \begin{bmatrix} a_{11} & a_{12} & a_{13} & a_{14} \\ a_{21} & a_{22} & a_{23} & a_{24} \\ a_{31} & a_{32} & a_{33} & a_{34} \\ a_{41} & a_{42} & a_{43} & a_{44} \end{bmatrix} \quad \text{Formula (12)}$$

Machine learning is a method for implementing artificial intelligence. An objective of the method is to design and analyze some algorithms (namely, models) that enable a computer to automatically "learn". The designed algorithms are referred to as machine learning models. The machine learning models are a type of algorithms that obtain a rule by automatically analyzing data and predict unknown data according to the rule.

Deep learning is a new technical field generated in a machine learning research process. Specifically, the deep learning is a method for performing deep representation learning on data in the machine learning. The deep learning is for interpreting the data by establishing a neural network that simulates a human brain to perform analysis and learning. In a machine learning method, almost all features need to be determined by industry experts, and then the features are encoded. However, a deep learning algorithm attempts to learn of features from data. An algorithm designed based on a deep learning idea is referred to as a deep learning model.

Currently, a typical structure of a deep learning model is a deep neural network. A neural network model is a mathematical model or a computational model that imitates a structure and a function of a biological neural network (a central nervous system of an animal, especially a brain). The neural network model includes a large quantity of connected neurons for computation. A neural network model may include a plurality of neural network layers with different functions, and each layer includes parameters and computation rules. Different layers in the neural network have different names based on different computation formulas or different functions. For example, a layer for convolution computation is referred to as a convolutional layer. The convolutional layer is commonly used to perform feature extraction on an input signal (for example, an image). One neural network may also include a combination of a plurality of sub-neural networks. Neural networks of different structures may be applied to different scenarios (for example, classification and recognition), or provide different effects when applied to a same scenario. That the structures of the neural networks are different specifically includes one or more of the following: quantities of network layers in the neural networks are different, sequences of the network layers are different, or weights, parameters, or computation formulas at the network layers are different. A plurality of different types of neural networks that have high accuracy and that are applied to application scenarios such as recognition or classification already exist in the industry. Some of the neural networks, after being trained by using a specific data set, may be separately used to complete a task, or complete a task in combination with another neural network (or another functional module). In other words, the deep learning model is actually a machine learning model with a complex structure of the neural network.

In the context of big data and big computing, artificial intelligence technologies represented by machine learning develop rapidly, become a core foundation of key technologies such as computer vision, an intelligent voice, natural language processing, biometric feature recognition, and a recommendation system, are widely applied to fields such as transportation, education, finance, healthcare, and smart city, and gradually become one of major forces that promote information revolution and social development. Rapid development of artificial intelligence is attributed to two important factors: innovation of an algorithm model and continuous improvement of a computing capability of an intelligent chip.

The neural network includes a convolutional neural network (convolutional neural network, CNN), a recurrent neural network (recurrent neural network, RNN), a feedforward neural network (feedforward neural network, FNN), a self-attention mechanism (self-attention), and the like. A neural network model transformer whose basic structure is the self-attention mechanism is initially configured for a natural language processing task, and is later extended to fields such as computer vision, speech recognition, and a recommendation system. An architecture of the transformer is used as an example. This type of neural network includes several transformer encoders (encoder)/decoders (decoder). Each encoder or decoder includes a self-attention mechanism structure and a feedforward network structure. In the network model, most computing complexity comes from matrix multiplication (Matrix Multiplication), for example, convolution or full connection, and a part of remaining computing overheads come from vector operators such as a normalized exponential function (softmax) and layer normalization (layernorm). In addition, there are a small quantity of scalar operations such as conditional determining.

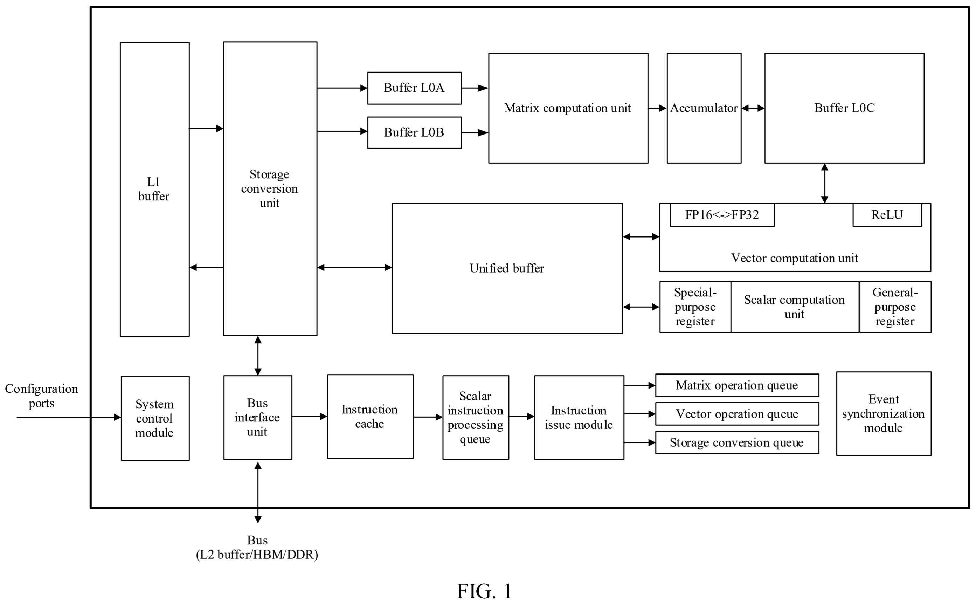

In the post-Moore era, although chip transistor density still continues to increase, it is very difficult to further improve power consumption density and performance density, which means that computational power cannot be improved through process improvement. Therefore, an important branch of chip development is a domain-specific architecture (domain-specific architecture, DSA), also referred to as an intelligent chip, an artificial intelligence (artificial intelligence, AI) chip, or an AI processor. This type of chip is strongly dedicated and easy to design. Based on a specific application feature, a computation unit is customized, and control logic is simplified. Although universality and flexibility are sacrificed for a design of a storage structure and a data channel that adapt to a domain computing feature, high performance and an energy efficiency ratio are achieved, and the chip is widely applied to fields such as high-performance computing, artificial intelligence, and cryptography. For example, AI chips specially designed for an artificial intelligence scenario include NVIDIA graphics processing units (graphics processing unit, GPU), Google tensor processing units (tensor processing unit, TPU), and Huawei Ascend AI chips. A DaVinci (DaVinci) chip architecture specially designed for the artificial intelligence scenario is used as an example. As shown in FIG. 1, a core computation unit of the DaVinci chip architecture includes a matrix computation unit and a vector computation unit. The matrix computation unit is configured to perform a matrix multiplication operation, and the vector computation unit is configured to perform a vector-type operation.

A design core of the intelligent chip is to accelerate a matrix multiplication operation. Therefore, the matrix computation unit occupies a large area on the intelligent chip. Compared with computational power of the vector computation unit, computational power of the matrix computation unit is improved by magnitude. For example, in some intelligent chips, a computing power ratio of the matrix computation unit to the vector computation unit reaches 100:1. However, computation of the neural network is usually performed alternately on the matrix computation unit and the vector computation unit. Consequently, a vector-type operation with low computation complexity and a low computational power requirement becomes a bottleneck that restricts computational power of the intelligent chip, affects a throughput of the intelligent chip, and reduces training and reasoning efficiency of the intelligent chip.

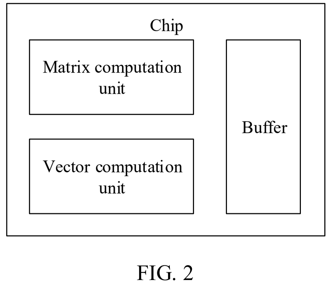

FIG. 2 shows a hardware structure of a chip according to this application. The chip may be disposed in an electronic device configured to train a neural network model, or may be disposed in an electronic device that performs reasoning by using a neural network model. The chip includes a matrix computation unit, and the matrix computation unit is configured to execute a matrix multiplication operator to perform a matrix multiplication operation. The matrix computation unit may also be referred to as a cube unit, a tensor core (tensor core), or the like. The chip further includes a vector computation unit, and the vector computation unit is configured to execute a vector operator to perform a vector operation. The vector computation unit may also be referred to as a vector unit, a CUDA core, or the like. Optionally, the chip further includes a buffer (for example, a buffer, a cache, or a register). The buffer is configured to store data input to the matrix computation unit, and accurately supply the input data to the matrix computation unit in a timely manner. Optionally, the chip may further include a scalar computation unit (not shown in the figure), and the scalar computation unit is mainly responsible for various types of scalar data operations and program procedure control. Algorithms at all layers in a neural network may be implemented in the chip shown in FIG. 2.

The AI chip is mounted on a host central processing unit (central processing unit, CPU) (host CPU) as a coprocessor, and the host CPU assigns a task. The AI chip and the host CPU may be two independent components that have a connection relationship. The AI chip may be connected to the host CPU in a pluggable manner. The AI chip and the host CPU may also be integrated into a same system on a chip (system on a chip, SoC). In another possible implementation, the host CPU may alternatively be embedded in the AI chip as a part of the AI chip. This is not limited herein.

In this embodiment, when the host CPU obtains an operator in the neural network, if the operator is a vector operator, the host CPU determines whether the vector operator meets a condition. If the vector operator meets the condition, the host CPU sends an instruction. The instruction instructs the AI chip to convert the vector operator into a corresponding target matrix multiplication operator. In this way, the AI chip may execute the target matrix multiplication operator by using the matrix computation unit, without a need to execute the vector operator by using the vector computation unit, and complete, by using powerful computational power of the matrix computation unit, an operation that is originally supposed to be completed by the vector computation unit. This can reduce operation pressure of the vector computation unit, accelerate a vector operator operation, improve an operation bottleneck caused by insufficient computational power of the vector computation unit, and improve reasoning or training efficiency of the neural network model.

Certainly, in another implementation, when determining that a vector operator meets a condition, the host CPU may convert the vector operator into a target matrix multiplication operator, and the matrix computation unit of the AI chip executes the target matrix multiplication operator.

A detailed process in which the host CPU determines whether the vector operator meets the condition and converts the vector operator into the matrix multiplication operator is described below.

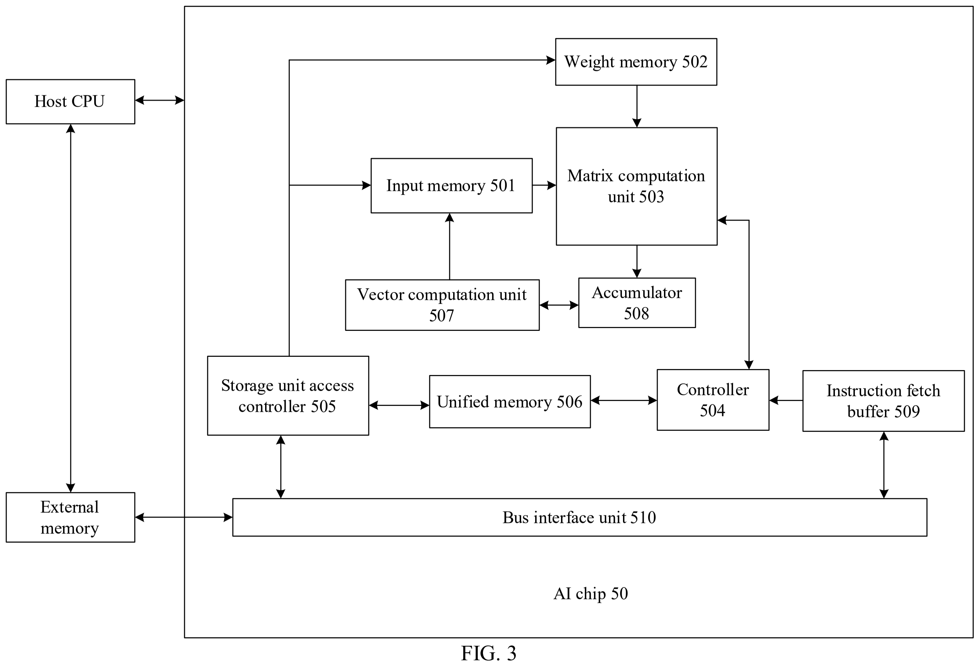

For example, FIG. 3 is a diagram of a structure of a data processing system according to this application. The data processing system includes an AI chip 50, a host CPU, and an external memory that are connected to each other. A core part of the AI chip 50 is a matrix computation unit 503. A controller 504 controls the matrix computation unit 503 to extract data in a memory (a weight memory 502 or an input memory 501) and perform a matrix multiplication operation.

In some implementations, the matrix computation unit 503 includes a plurality of processing units (process engine, PE). In some implementations, the matrix computation unit 503 is a two-dimensional systolic array. The matrix computation unit 503 may alternatively be a one-dimensional systolic array or another electronic circuit capable of performing mathematical operations such as multiplication and addition. In some implementations, the matrix computation unit 503 is a general-purpose matrix multiplication computation unit. Each PE includes a multiplier accumulator (multiplier accumulator, MAC). The MAC is an operation circuit for implementing matrix multiplication. One MAC may simultaneously perform matrix multiplication between two matrices of a preset size. A MAC arithmetic unit implements parallel computing through a specific circuit design, to accelerate multiplier accumulation.

For example, it is assumed that there is an input matrix A, a weight matrix B, and an output matrix C. The matrix computation unit obtains data corresponding to a matrix B from the weight memory 502, and buffers the data on each PE in the matrix computation unit 503. The matrix computation unit fetches data of the matrix A from the input memory 501, performs a matrix operation with the matrix B, to obtain a partial result or a final result of a matrix, and stores the result in an accumulator (accumulator) 508.

A vector computation unit 507 may perform further processing on an output of the matrix computation unit, for example, vector multiplication, vector addition, an exponential operation, a logarithmic operation, and a value comparison. For example, the vector computation unit 507 may be configured to perform network computation such as pooling (pooling), batch normalization (batch normalization), or local response normalization (local response normalization) at a non-convolutional/non-FC layer in a neural network.

In some implementations, the vector computation unit 507 can store a processed output vector in a unified memory 506. For example, the vector computation unit 507 may apply a nonlinear function to the output of the matrix computation unit 503, for example, a vector of an accumulated value, to generate an activation value. In some implementations, the vector computation unit 507 generates a normalized value, a combined value, or both a normalized value and a combined value. In some implementations, the processed output vector can be used as an activate input into the matrix computation unit 503. For example, the processed output vector can be used at a subsequent layer of the neural network.

The unified memory 506 is configured to store input data and output data.

For weight data, a storage unit access controller 505 (direct memory access controller, DMAC) directly transfers input data in the external memory to the input memory 501 and/or the unified memory 506, stores, in the weight memory 502, weight data in the external memory, and stores, in the external memory, the data in the unified memory 506.

A bus interface unit (bus interface unit, BIU) 510 is configured to implement interaction between the host CPU, the DMAC, and an instruction fetch buffer 509 through a bus.

The instruction fetch buffer (instruction fetch buffer) 509 connected to the controller 504 is configured to store instructions used by the controller 504.

The controller 504 is configured to invoke the instructions buffered in the instruction fetch buffer 509, to control a working process of the operation accelerator.

Usually, the unified memory 506, the input memory 501, the weight memory 502, and the instruction fetch buffer 509 each are an on-chip (On-Chip) memory. The external memory is a memory outside the AI chip 50. The external memory may be a double data rate synchronous dynamic random access memory (double data rate synchronous dynamic random access memory, DDR SDRAM for short), a high bandwidth memory (high bandwidth memory, HBM), or another readable and writable memory.

Operations at layers in the neural network may be performed by the matrix computation unit 503 or the vector computation unit 507.

An instruction sent by the host CPU in response to that a vector operator meets a condition may be stored in the external memory, and subsequently transmitted to the instruction fetch buffer 509 through the BIU 510. The controller 504 invokes the instruction cached in the instruction fetch buffer 509, to control conversion of the vector operator into a matrix multiplication operator. Certainly, when the host CPU is embedded in the AI chip 50, the instruction sent by the host CPU in response to that the vector operator meets the condition may not be stored in the external memory, but is directly stored in an on-chip memory for invoking by the controller 504. This is not limited herein.

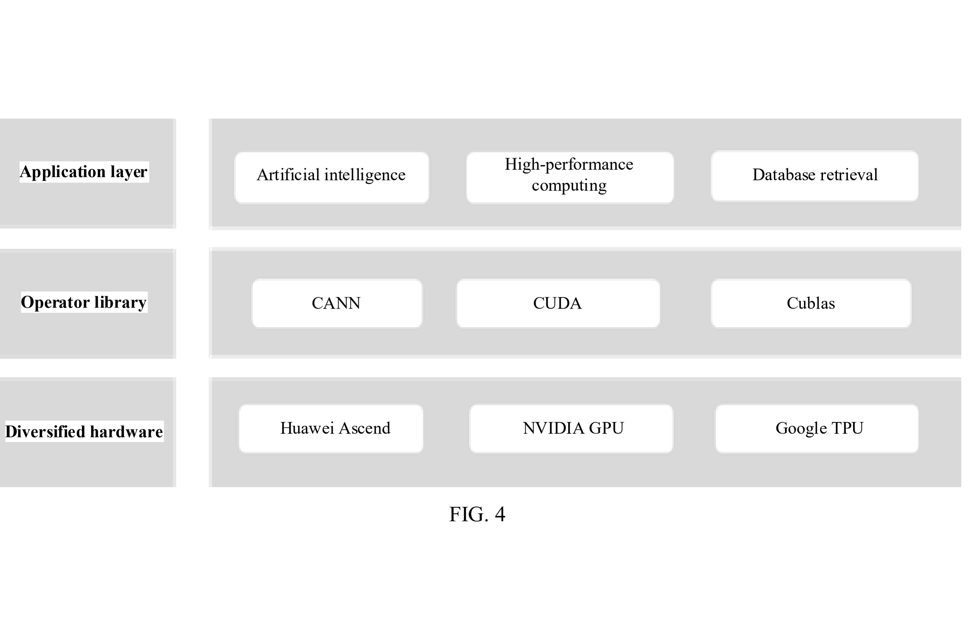

In an application scenario of this application, an intelligent chip is used to accelerate tasks such as artificial intelligence and high-performance computing, especially training and reasoning of a large-scale neural network. As shown in FIG. 4, the solution provided in this application focuses on an operator library of a system software stack, and can be applied to different neural network operators, provided that a part of operations in the neural network operators meet a condition, for example, neural network operators such as softmax and layernorm. Downward, a plurality of types of hardware, such as Huawei Ascend, NVIDIA GPU, and Google TPU, are supported. If both a matrix computation unit and a vector computation unit exist on intelligent chips of different vendors, vector-type computing originally performed on the vector computation unit can be accelerated based on the solution provided in this application. Upward, a plurality of scenarios, such as artificial intelligence, high-performance computing, and database retrieval, are supported. Algorithms in these scenarios usually include both a matrix multiplication operation and a vector-type operation.

The following describes in detail the data processing method in embodiments of this application with reference to accompanying drawings.

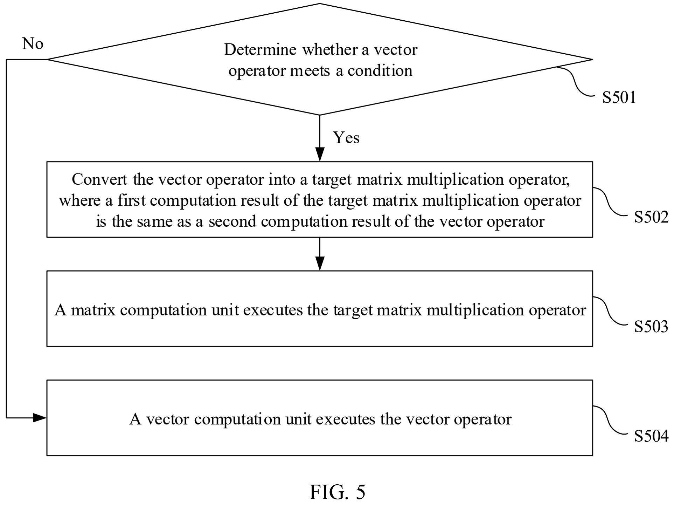

FIG. 5 is a schematic flowchart of a data processing method according to this application. This embodiment is executed by an electronic device. The electronic device includes an AI chip, and the AI chip includes a matrix computation unit and a vector computation unit. The electronic device may be a reasoning device, or may be a training device. For example, the electronic device is a mobile phone, a tablet computer, a notebook computer, a computer, a server, a workstation, or a computer cluster. This embodiment includes the following steps.

S501: Determine whether a vector operator meets a condition.

Whether the vector operator meets the condition is determined, to determine whether the vector operator is capable of or is suitable for being converted into a matrix multiplication operator.

In this embodiment, determining whether the vector operator meets the condition includes determining whether the vector operator is a target vector operator. The target vector operator is a vector operator that is capable of being converted into a matrix multiplication operator, and a computation result of the converted matrix multiplication operator is the same as a computation result of the vector operator existing before conversion. Not all vector operators can be smoothly converted into matrix multiplication operators. To convert the vector operators into the matrix multiplication operators, a linear relationship needs to be met mathematically. This ensures that a computation result of an operator before conversion is consistent with a computation result of an operator after conversion. Specifically, after a vector operator is obtained, whether the vector operator exists in a target operator set may be queried. If the vector operator exists in the target operator subset, it may be determined that the target vector operator is a target vector operator, that is, the vector operator meets a condition. The target operator set includes a vector operator that is in the operator library and that is capable of being converted into a matrix multiplication operator, and a computation result of the converted matrix multiplication operator is the same as a computation result of the vector operator existing before conversion.

For example, the target vector operator includes but is not limited to at least one of a row-wise matrix summation (for example, Formula (6)), a column-wise matrix summation (for example, Formula (7)), scalar-matrix multiplication (for example, Formula (11)), a vector outer product (for example, Formula (5)), and a Hadamard product operation between a matrix and a vector (for example, Formula (8) to Formula (10)). Operations corresponding to Formula (5) to Formula (11) are implemented on the vector computation unit. The vector computation unit may become a bottleneck that restricts computational power of the AI chip. Compared with the matrix computation unit, the vector computation unit has weak computational power and a small throughput. In addition, when the vector operator includes a matrix, the matrix needs to be split into several vector operations, and a plurality of loops are introduced. A long period of computing time causes a delay in subsequent computing of the matrix computation unit, and restricts the computational power of the matrix computation unit. For example, when performing row/column-wise matrix reduce summation, the vector computation unit needs to split the matrix into vectors by row/column, split each vector into a sub-vector that can be operated by the vector computation unit and is solved by using one instruction, and perform a reduce summation operation on results of several sub-vectors, to obtain a final result. For another example, when performing a Hadamard product operation between a matrix and a column vector, the vector computation unit needs to split the matrix into a plurality of first row vectors by row, broadcast a value of each row in the column vector to obtain a plurality of second row vectors, and multiply first row vectors in a same row and a second row vector by elements. Scalar-matrix multiplication and a Hadamard product operation between a matrix and a row vector are similar, a matrix needs to be split into a plurality of vectors, and a plurality of loops are introduced, thereby affecting computing efficiency of the AI chip.

Therefore, in this embodiment, whether the vector operator is the target vector operator is determined. If the vector operator is the target vector operator, the vector operator may be subsequently converted into a corresponding matrix multiplication operator, so that the target matrix multiplication operator can be executed by using the matrix computation unit with higher computational power, thereby improving overall computing efficiency.

If the vector operator is the target vector operator, it is determined that the vector operator meets the condition. If the vector operator is not the target vector operator, it is determined that the vector operator does not meet the condition.

Optionally, because the vector operator that is originally processed by the vector computation unit is converted into the target matrix multiplication operator, and the target matrix multiplication operator is transferred to the matrix computation unit for processing, additional transfer overheads are generated. Therefore, to ensure that a gain brought by accelerating a vector operation by using the matrix computation unit is greater than the transfer overheads, in addition to determining whether the vector operator is capable of being converted into the matrix multiplication operator, time overheads corresponding to that the vector operator is converted into the target matrix multiplication operator for processing by the matrix computation unit and time overheads corresponding to that the vector operator is not converted and is processed by the vector computation unit may be further predicted, and are compared, to determine, based on an overhead comparison result, whether the vector operator meets the condition.

Specifically, determining whether the vector operator meets the condition further includes: determining whether a first cost is less than a second cost. The first cost is predicted duration required for executing, by the matrix computation unit, the target matrix multiplication operator to complete computation. The first cost includes time overheads caused by transferring the target matrix multiplication operator. The second cost is predicted duration required for executing, by the vector computation unit, the vector operator to complete computation. The first cost and the second cost may be computed based on a cost model. A manner of computing the first cost is shown in Formula (13), and a manner of computing the second cost is shown in Formula (14).

$$T_{Matrix} = \alpha_1 \times M + \beta_1 \qquad \text{Formula (13)}$$

$$T_{Vector} = \alpha_2 \times M + \beta_2 \qquad \text{Formula (14)}$$

$T_{Matrix}$ is the first cost, and $T_{Vector}$ is the second cost. $\alpha_1$, $\beta_1$, $\alpha_2$, and $\beta_2$ are coefficients. M is a size of a matrix in the vector operator. M may be obtained based on the vector operator. For example, if the vector operator is scalar-matrix multiplication shown in Formula (11), or a Hadamard product operation shown in Formula (9) and Formula (10), or a row/column-wise matrix summation operation shown in Formula (6), M is a size of a matrix A in the vector operator. If the vector operator is a vector outer product operation shown in Formula (5), the size M of the matrix is a product of a row vector and a column vector.

$\alpha_1$, $\beta_1$, $\alpha_2$, and $\beta_2$ may be obtained through fitting based on a test result. Specifically, duration $T'_{Vector}$ required for completing processing of the vector operator on the vector computation unit and duration $T'_{Matrix}$ required for converting the vector operator into a corresponding matrix multiplication operator and completing processing of the matrix multiplication operator on the matrix computation unit may be separately tested, the size M of the matrix in the vector operator is changed to obtain a plurality of groups of test data, and the plurality of groups of test data are substituted into Formula (13) and Formula (14) for linear fitting to obtain $\alpha_1$, $\beta_1$, $\alpha_2$, and $\beta_2$.

If the first cost is less than the second cost, it indicates that a gain of converting the vector operator into a corresponding target matrix multiplication operator and executing the target matrix multiplication operator by the matrix computation unit is greater than overheads introduced by converting the vector operator into the target matrix multiplication operator. If the first cost is greater than the second cost, it indicates that a gain of converting the vector operator into a corresponding target matrix multiplication operator and executing the target matrix multiplication operator by the matrix computation unit is less than overheads introduced by converting the vector operator into the target matrix multiplication operator. If the first cost is equal to the second cost, a gain brought by conversion is equal to overheads brought by conversion, and no acceleration effect is achieved.

In an implementation, the step of determining whether the vector operator is the target vector operator may be first performed, and then the step of determining whether the first cost is less than the second cost is performed when it is determined that the vector operator is the target operator; or the step of determining whether the first cost is less than the second cost does not need to be performed if the vector operator is not the target operator. In another implementation, the step of determining whether the vector operator is the target vector operator and the step of determining whether the first cost is less than the second cost may be performed in parallel.

When the vector operator is the target vector operator and the first cost is less than the second cost, it is determined that the vector operator meets the condition. When the vector operator is not the target vector operator, or the vector operator is the target vector operator but the first cost is greater than or equal to the second cost, it is determined that the vector operator does not meet the condition.

If whether the vector operator meets the condition is determined only by determining whether the vector operator is the target vector operator, when the vector operator is the target vector operator, it is determined that the vector operator meets the condition; or when the vector operator is not the target vector operator, it is determined that the vector operator does not meet the condition.

S502 is performed if the vector operator meets the condition. S504 is performed if the vector operator does not meet the condition.

S502: Convert the vector operator into the target matrix multiplication operator, where a first computation result of the target matrix multiplication operator is the same as a second computation result of the vector operator.

After it is determined that the vector operator meets the condition, the vector operator is converted into the target matrix multiplication operator corresponding to the vector operator, so that the matrix computation unit can execute the target matrix multiplication operator. In this way, the vector operation originally performed by the vector computation unit is migrated to the matrix computation unit to perform an equivalent matrix multiplication operation, thereby improving operation efficiency. In this embodiment, the first computation result of the target matrix multiplication operator needs to be the same as the second computation result of the vector operator, to ensure accuracy of a computation result after conversion. To be specific, for same input data, a first computation result obtained by performing, by using the matrix computation unit, an operation corresponding to the target matrix multiplication operator on the input data is the same as a second computation result obtained by performing, by using the vector computation unit, an operation corresponding to the vector operator on the input data.

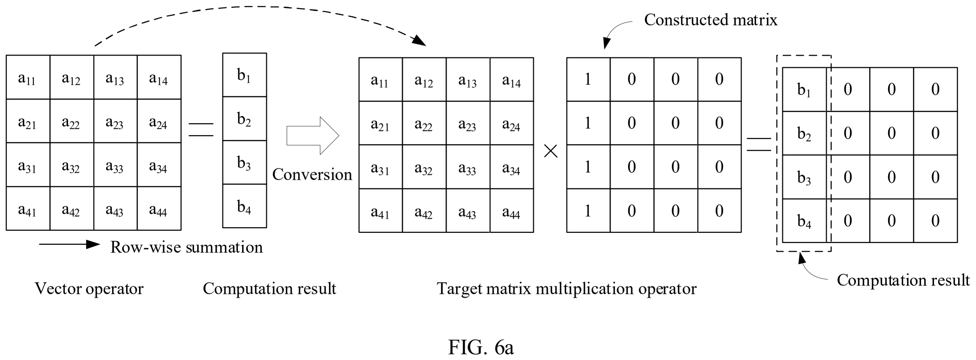

Different vector operators correspond to different target matrix multiplication operators. The following lists conversion of four types of vector operators into matrix multiplication operators. It may be understood that conversion of the four types of vector operators are not limited in this application. In FIG. 6a to FIG. 6f, dimensions of a matrix and a vector are merely used as examples, and should not be construed as a limitation on this application. In actual applications, dimensions of a matrix and a vector of an operator are determined based on an actual situation.

1. Row-wise matrix summation and/or column-wise matrix summation

As shown in FIG. 6a, a left vector operator is row-wise matrix summation, and a right vector operator is a target matrix multiplication operator obtained through conversion based on the vector operator. A left matrix of the target matrix multiplication operator comes from the vector operator and does not need to be changed, and a right matrix is a constructed matrix. All values of elements in a $1^{st}$ column of the constructed matrix are 1, and all remaining elements are 0, so that a computation result of the vector operator is the same as a computation result of the target matrix multiplication operator. For example, $b_1=a_{11}+a_{12}+a_{13}+a_{14}$, $b_2=a_{21}+a_{22}+a_{23}+a_{24}$, $b_3$ and $b_4$ are similar, and the computation result of the vector operator is consistent with the computation result of the target matrix operator. The matrix computation unit executes the target matrix multiplication operator in FIG. 6a and outputs a matrix. Data in a $1^{st}$ column of the output matrix is used as a computation result.

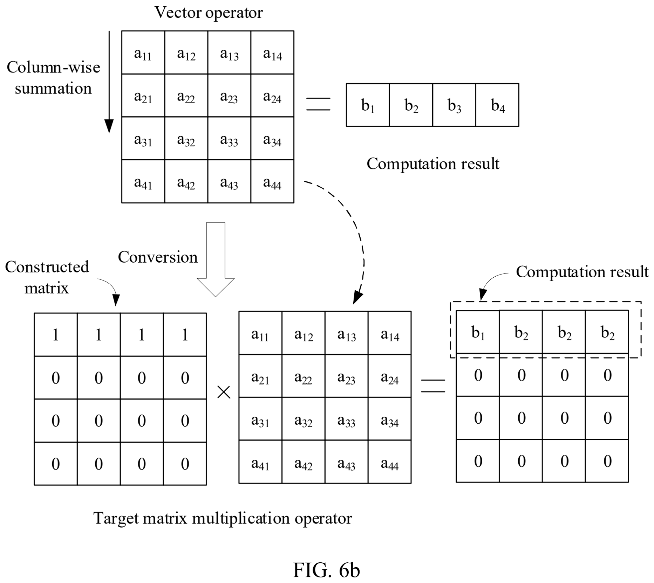

As shown in FIG. 6b, an upper vector operator is column-wise matrix summation, and a lower vector operator is a target matrix multiplication operator obtained through conversion based on the vector operator. A left matrix of the target matrix multiplication operator is a constructed matrix, and a right matrix comes from the vector operator and does not need to be changed. All values of elements in a $1^{st}$ row of the constructed matrix are 1, and all remaining elements are 0, so that a computation result of the vector operator is the same as a computation result of the target matrix multiplication operator. For example, $b_1=a_{11}+a_{21}+a_{31}+a_{41}$, $b_2=a_{12}+a_{22}+a_{32}+a_{42}$, $b_3$ and $b_4$ are similar, and the computation result of the vector operator is consistent with the computation result of the target matrix operator. The matrix computation unit executes the target matrix multiplication operator in FIG. 6b and outputs a matrix. Data in a $1^{st}$ row of the output matrix is used as a computation result.

2. Hadamard product of a matrix and a vector

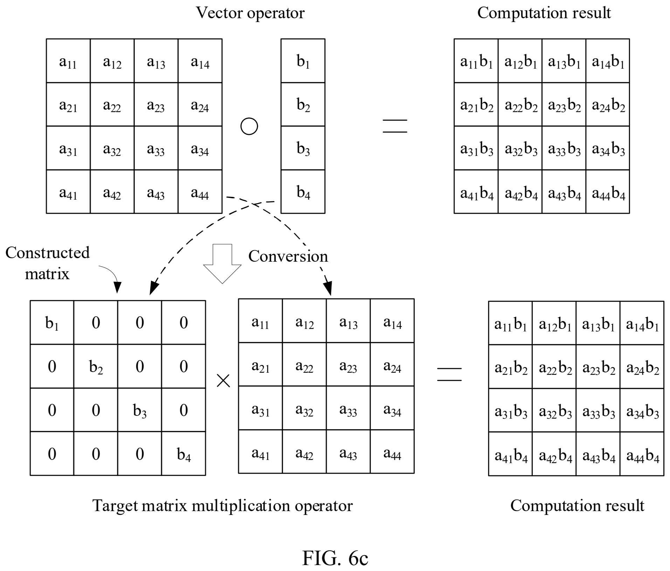

As shown in FIG. 6c, an upper vector operator is a Hadamard operation performed on a matrix and a column vector, a quantity of elements of the column vector is the same as a quantity of rows of the matrix, and a lower vector operator is a target matrix multiplication operator obtained through conversion based on the vector operator. A left matrix of the target matrix multiplication operator is a constructed matrix constructed based on a vector in the vector operator, the constructed matrix is a diagonal matrix, and a right matrix comes from a matrix in the vector operator and does not need to be changed. Values of elements on a main diagonal (from an upper left corner to a lower right corner of the matrix) of the constructed matrix are values of elements in a same row of the column vector in the vector operator, and values at all remaining positions are 0, so that a computation result of the vector operator is the same as a computation result of the target matrix multiplication operator.

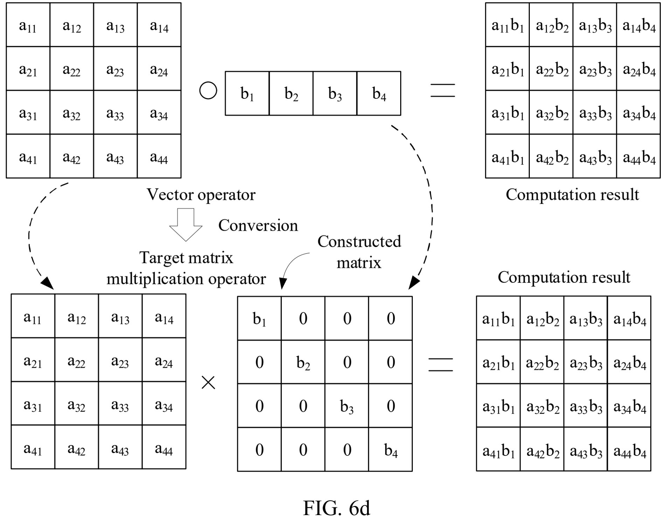

As shown in FIG. 6d, a left vector operator is a Hadamard operation performed on a matrix and a row vector, a quantity of elements of the row vector is the same as a quantity of columns of the matrix, and the right is a target matrix multiplication operator obtained through conversion based on the vector operator. A left matrix of the target matrix multiplication operator comes from a matrix in the vector operator and does not need to change, and a right matrix is a constructed matrix constructed based on a row vector in the vector operator. The constructed matrix is a diagonal matrix. Values of elements on a main diagonal of the constructed matrix are values of elements in a same column of the row vector in the vector operator, and values at all remaining positions are 0, so that a computation result of the vector operator is the same as a computation result of the target matrix multiplication operator.

3. Scalar-matrix multiplication

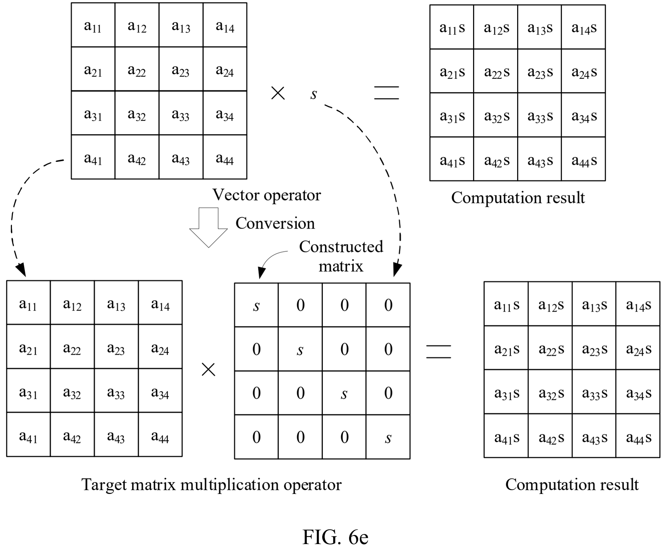

As shown in FIG. 6e, an upper vector operator is scalar-matrix multiplication, and a lower vector operator is a target matrix multiplication operator obtained through conversion based on the vector operator. A left matrix of the target matrix multiplication operator comes from a matrix in the vector operator and does not need to change, and a right matrix is a constructed matrix constructed based on a scalar in the vector operator. The constructed matrix is a diagonal matrix, all values of elements on a main diagonal of the constructed matrix are values of the scalars in the vector operator, and values at all remaining positions are 0.

4. Vector outer product

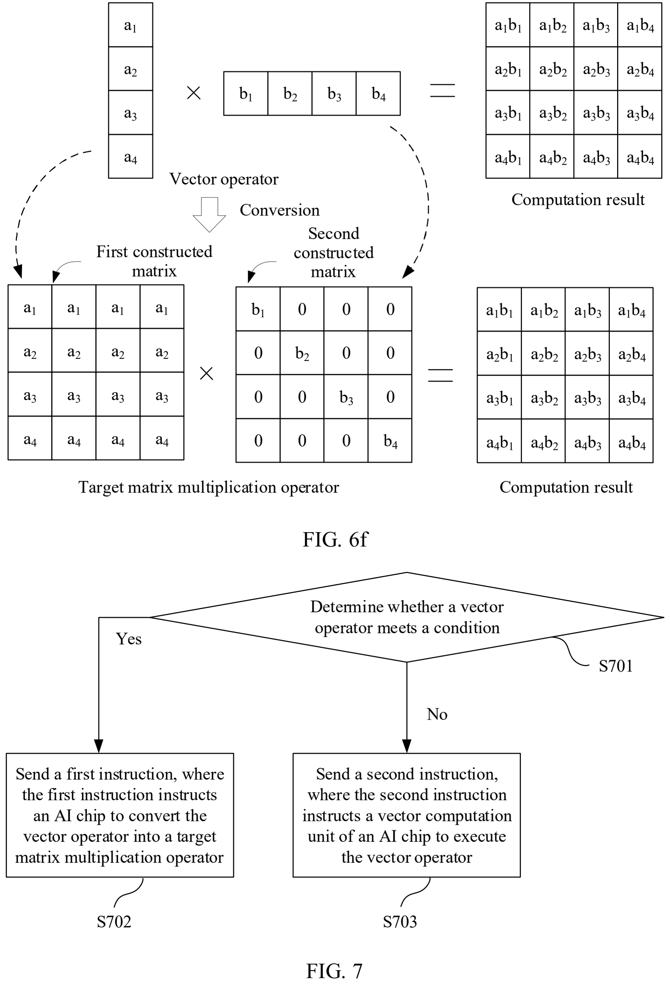

As shown in FIG. 6f, an upper vector operator is a vector outer product, and a lower vector operator is a target matrix multiplication operator obtained through conversion based on the vector operator. A left matrix of the target matrix multiplication operator is a first constructed matrix constructed based on a column vector in the vector operator, and a right matrix is a second constructed matrix constructed based on a row vector in the vector operator. The first constructed matrix is a two-dimensional matrix obtained by broadcasting the column vector in the vector operator along a row, and a quantity of columns of the first constructed matrix is equal to a quantity of columns of the row vector in the vector operator. The second constructed matrix is a diagonal matrix, both a quantity of rows and a quantity of columns of the second constructed matrix are the same as the quantity of columns of the row vector in the vector operator, values of elements on a main diagonal of the second constructed matrix are values of elements in a same column of the row vector in the vector operator, and values at all remaining positions are 0, so that a computation result of the vector operator is the same as a computation result of the target matrix multiplication operator.

In the foregoing four conversion scenarios, a size of the constructed matrix in the target matrix multiplication operator is determined based on a size of a matrix/vector in the vector operator. For example, in FIG. 6a to FIG. 6e, a size of a matrix in the target matrix multiplication operator from the vector operator is (M, N). If the constructed matrix is a left matrix, a size of the constructed matrix is (M, M); or if the constructed matrix is a right matrix, a size of the constructed matrix is (N, N).

When a dimension of the constructed matrix is large, the constructed matrix occupies large storage space, and transfer overheads are also increased. If on-chip storage space of the AI chip is insufficient, the constructed matrix needs to be stored in an external memory, and the transfer overheads are further increased. For a matrix multiplication operation of a matrix with a large dimension, limited by hardware of the matrix computation unit, an entire matrix multiplication operation cannot be completed at one time. Usually, a matrix is divided into a plurality of block matrices, and the AI chip loads the block matrix onto an on-chip buffer for computation each time, that is, performs a block matrix multiplication operation.

Optionally, to reduce storage space occupied by the constructed matrix and transfer overheads, based on a feature of the block matrix multiplication operation of the AI chip and a feature of the constructed matrix, in this instance, when the constructed matrix of the target matrix multiplication operator is constructed, only the block matrix may be constructed, and a complete matrix does not need to be constructed, to reduce storage space occupied by the constructed matrix and transfer overheads. Specifically, it can be learned from the constructed matrix shown in FIG. 6a to FIG. 6f that values of a large quantity of elements in the constructed matrix are 0. In this case, in a plurality of block matrices corresponding to the constructed matrix, values of all elements in a part of the block matrices are 0. All values of all elements in a matrix obtained by multiplying a block matrix whose all values of all elements are 0 and any matrix are still 0, and a final computation result is not affected. Such computation may be considered as invalid computation. This not only wastes storage space, but also increases transfer overheads and wastes computing resources.

Therefore, when the constructed matrix of the target matrix multiplication operator is constructed, only a target block matrix that can be effectively computed may be constructed, and a complete matrix does not need to be constructed. The target block matrix is a part of the constructed matrix, and not all values in the target block matrix are 0. In other words, the target block matrix has non-zero valid data. If the constructed matrix in the target matrix multiplication operator is a diagonal matrix, the target block matrix may also be a diagonal matrix. A block matrix whose all values of all elements are 0 may not be constructed. In addition, another block matrix the same as the target block matrix does not need to be constructed, and the target block matrix may be reused. In this way, storage space occupied by the constructed matrix can be reduced, data that needs to be transferred can be reduced, and invalid computation can be reduced, thereby improving efficiency of constructing the target matrix multiplication operator and efficiency of processing the target matrix multiplication operator by the matrix computation unit.

For example, the constructed matrix in FIG. 6a is divided into four 2*2 block matrices, and the four block matrices include two $\begin{bmatrix} 1 & 0 \\ 1 & 0 \end{bmatrix}$ and two $\begin{bmatrix} 0 & 0 \\ 0 & 0 \end{bmatrix}$. If all elements in the block matrix $\begin{bmatrix} 0 & 0 \\ 0 & 0 \end{bmatrix}$ are 0, the block matrix may be considered as an invalid block matrix, and does not need to be constructed. If an element in the block matrix $\begin{bmatrix} 1 & 0 \\ 1 & 0 \end{bmatrix}$ is

not 0, the block matrix needs to be constructed. Because the constructed matrix includes two same matrices $\begin{bmatrix} 1 & 0 \\ 1 & 0 \end{bmatrix}$

that can be reused, only one matrix $\begin{bmatrix} 1 & 0 \\ 1 & 0 \end{bmatrix}$ may be constructed as the target block matrix, and a complete matrix does not need to be constructed. In this way, a data amount of the constructed matrix can be greatly reduced. It may be understood that the constructed matrix and the block matrix herein are merely used as examples. In actual applications, dimensions of the constructed matrix and the block matrix are usually larger.

If the constructed matrix in the target matrix multiplication operator is a diagonal matrix, and a value of an element on a diagonal of the constructed matrix is different from a value of another element on the diagonal, for example, the constructed matrices in FIG. 6c, FIG. 6d, and FIG. 6f, a plurality of target block matrices may be constructed, all the plurality of target block matrices are diagonal matrices, and elements on diagonals of the plurality of target block matrices include all elements of a corresponding vector in the vector operator. In this case, a plurality of target block matrices may be constructed simultaneously. Alternatively, a target block matrix may be first constructed for the matrix computation unit to perform computation, a value on a diagonal of the target block matrix is replaced to obtain a new target block matrix, and the new target block matrix is used for the matrix computation unit to perform computation. This process may be completed on the AI chip, to improve processing efficiency and reduce data transfer overheads.

Optionally, when the constructed matrix of the target matrix multiplication operator is constructed, the target block matrix may be constructed based on a size of a buffer of the AI chip. The buffer may be an input buffer of the matrix computation unit, and may be specifically a buffer, a cache, a register, or the like. A DaVinci architecture is used as an example. The buffer may be an L1 buffer or a buffer L0A/B. A GPU is used as an example. The buffer may be an L0/L1 cache. A size of the target block matrix is less than or equal to a size of the buffer, so that the target block matrix may be directly stored in the on-chip buffer of the AI chip, thereby reducing data that needs to be transferred, and improving efficiency of constructing the target matrix multiplication operator and efficiency of processing the target matrix multiplication operator by the matrix computation unit.

Usually, a MAC in the matrix computation unit is configured to compute matrix multiplication between matrices of a preset size. The preset size is, for example, 4*4, 8*8, 16*16, or another size. Optionally, to maximize performance of the matrix computation unit, the size of the target block matrix may be an integer (greater than or equal to 1) multiple of the preset size.

For example, an example in which the size of the buffer is 64 kilobytes (KB), the matrix computation unit uses half-precision floating-point (half-precision floating-point, FP 16) precision (one FP16 value occupies two bytes), and a preset size of a matrix processed by the MAC is 16*16 is used for description. The buffer may store a maximum of 16384 FP16 values. In this case, the size of the target block matrix may be any size in 16*16, 32*16, 48*16, 32*32, ..., 128*128, and the like.

S503: The matrix computation unit executes the target matrix multiplication operator.

After the target matrix multiplication operator is constructed, the matrix computation unit can execute the target matrix multiplication operator. Compared with the vector computation unit, the matrix computation unit can complete more times of computation by using one instruction, thereby improving operation efficiency.

S504: The vector computation unit executes the vector operator.

If the vector operator does not meet the condition, it indicates that the vector operator cannot be converted into an equivalent matrix multiplication operator, or efficiency of executing the vector operator by the vector computation unit is higher/the same, and the vector computation unit is used to execute the vector operator, to ensure maximum efficiency.

In this embodiment, the vector operator that meets the condition is converted into the target matrix multiplication operator, so that an operation originally processed by the vector computation unit can be migrated to the matrix computation unit for an operation, and an operation is performed more efficiently based on more powerful computation power of matrix multiplication, thereby improving reasoning or training efficiency of a neural network model.

S501 in FIG. 5 may be performed by the host CPU of the electronic device, and S502 to S504 are performed by the AI chip of the electronic device. Certainly, alternatively, S501 and S502 may be performed by the host CPU of the electronic device, and S503 and S504 may be performed by the AI chip of the electronic device. This is not limited herein.

FIG. 7 is a schematic flowchart of another data processing method according to this application. This embodiment is performed by a host CPU. The host CPU is connected to an AI chip. This embodiment includes the following steps.

S701: Determine whether a vector operator meets a condition.

This step is similar to S501. For details, refer to the foregoing related descriptions. Details are not described herein again.

S702 is performed if the vector operator meets the condition. S703 is performed if the vector operator does not meet the condition.

S702: Send a first instruction, where the first instruction instructs the AI chip to convert the vector operator into a target matrix multiplication operator.

If the vector operator meets the condition, it indicates that the vector operator is capable of being converted into a matrix multiplication operator. Therefore, the host CPU sends the first instruction that instructs the AI chip to convert the vector operator into the target matrix multiplication operator, so that a matrix computation unit of the AI chip can execute the target matrix multiplication operator.

S703: Send a second instruction, where the second instruction instructs a vector computation unit of the AI chip to execute the vector operator.

If the vector operator does not meet the condition, it indicates that the vector operator cannot be converted into the matrix multiplication operator, or processing the vector operator by the vector computation unit is more advantageous. Therefore, the host CPU sends the second instruction for instructing the vector computation unit of the AI chip to execute the vector operator.

In this embodiment, after obtaining the vector operator, the host CPU first determines whether the vector operator is capable of being converted into a matrix multiplication operator that can be executed by the matrix computation unit. After determining that the vector operator meets the condition, the host CPU instructs the AI chip to convert the vector operator into a corresponding target matrix multiplication operator. In this way, accuracy of a computation result can be ensured, and operation efficiency can be improved.

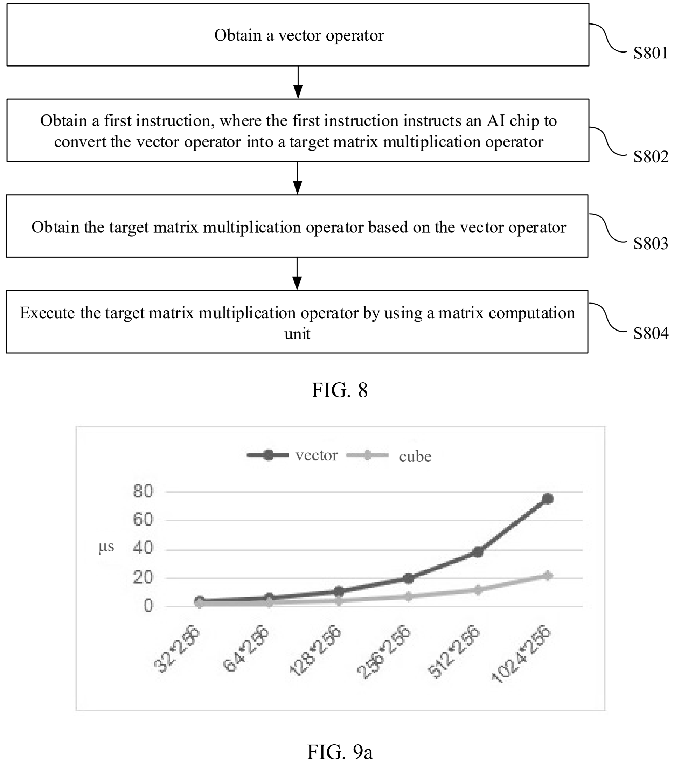

FIG. 8 is a schematic flowchart of still another data processing method according to this application. This embodiment is executed by an AI chip. The AI chip includes a matrix computation unit and a vector computation unit. This embodiment includes the following steps.

S801: Obtain a vector operator.

The AI chip transfers the vector operator from an off-chip memory to the AI chip.

S802: Obtain a first instruction, where the first instruction instructs the AI chip to convert the vector operator into a target matrix multiplication operator.

The first instruction is sent by the host CPU after the host CPU determines that the vector operator meets a condition.

S803: Obtain a target matrix multiplication operator based on the vector operator.

This step is similar to S502. Therefore, details are not described herein again.

S804: Execute the target matrix multiplication operator by using the matrix computation unit.

After the target matrix multiplication operator is obtained based on the vector operator, the matrix computation unit may execute the target matrix multiplication operator, and the vector computation unit does not need to execute the vector operator. The matrix multiplication operator may process a plurality of pieces of element multiplication in parallel, has higher computational power than the vector computation unit, and can improve data operation efficiency. In a training and/or reasoning scenario of a neural network model, training or reasoning efficiency can be improved.

To verify effect of the technical solution provided in this application, tests are performed on different AI chips. Result show that based on the technical solutions provided in this application, a throughput of the AI chip can be greatly improved, and end-to-end reasoning efficiency can be greatly reduced.

1. Implementation on NVIDIA V100 GPU

An implementation of the technical solutions (FIG. 5 and FIG. 8) provided in this application is performed on NVIDIA V100 GPU, and is compared with an implementation of an open-source operator library on a same hardware platform. A used GPU CUDA version is 10.2, a version of a GCC compiler is 7.5, a size of a matrix in the vector operator is (256, 4194304), and a data type of a matrix operation is half-precision. Each test is run for 10 times. An average obtained after a maximum value and a minimum value are removed is finally computed and used as a reference.

In a row-wise matrix summation operation, compared objects include a reduction interface provided by NVIDIA, a reduction interface in a computing library Thrust provided by NVIDIA, a vector sum interface cudaSasum in an operator library Cublas provided by NVIDIA, and a matrix vector multiplication gemv interface in an operator library Cublas provided by NVIDIA. Results are shown in Table 1. A throughput is obtained by dividing a data amount of computation by running duration.

Table 1. Test results of row-wise matrix summation

| Method | Throughput | Running duration |
| --- | --- | --- |
| NVIDIA official reduction sample | 20.047 GB/s | 0.217s |
| Thrust optimization library reduction | 308.981 GB/s | 0.0139s |

(continued)

| Method | Throughput | Running duration |
|---|---|---|
| Cublas vector sum (cudaSasum) | 404.909 GB/s | 0.0106s |
| Cublas matrix vector multiplication (gemv) | 423.163 GB/s | 0.0101s |
| Technical solutions provided in this application | 765.156 GB/s | 0.00561s |

In a Hadamard product of a matrix and a vector and scalar-matrix multiplication, compared objects include kernel customized through an NVIDIA CUDA interface and a transform interface in the computing library Thrust provided by NVIDIA. The result is shown in the following table. The throughput is obtained by dividing a data amount of computation by the running duration.

Table 2. Test results of a Hadamard product of a matrix and a vector and scalar-matrix multiplication

| Type | Method | Throughput | Running duration |
|---|---|---|---|
| BitMulVec | Kernel customization | 394.981 GB/s | 0.0109s |
| | Thrust optimization library transform | 275.601 GB/s | 0.0156s |
| | Method in this application | 760.775 GB/s | 0.00564s |
| BitMulSca | Kernel customization | 395.320 GB/s | 0.0109s |
| | Thrust optimization library transform | 209.719 GB/s | 0.0206s |
| | Method in this application | 765.020 GB/s | 0.00563s |

For the row-wise matrix summation operation, compared with the open-source matrix vector multiplication gemv interface, in the technical solutions provided in this application, the throughput is improved by 80.8%. A performance gain can be clearly seen. In actual applications, utilization of computational power of a matrix multiplication operation unit can be improved. For the Hadamard product of a matrix and a vector and scalar-matrix multiplication, in the technical solutions provided in this application, the throughput indicator is 2.76 times and 3.65 times that in other solutions, and utilization of computational power of a matrix multiplication operation unit can also be greatly improved.

2. Implementation on Huawei Ascend 910 chip

On the Huawei Ascend 910 chip, row-wise matrix summation is implemented based on the technical solutions provided in this application and an existing solution implemented on a vector computation unit. A size of a matrix is changed, to determine gains of a conversion operation on different sizes of matrices. In addition, an optimized implementation of row-wise matrix summation is integrated into reasoning of a transformer model such as Wukong-Huahua, to verify performance improvement brought by end-to-end reasoning. In FIG. 9a to FIG. 9d, vector indicates that a vector operator is not converted and is directly computed on a vector computation unit, and cube indicates that a vector operator is converted into a corresponding matrix multiplication operator, and the corresponding matrix multiplication operator is computed on a matrix computation unit.

First, a column of an original matrix is fixed, and a gain brought by converting row-wise matrix summation into a corresponding matrix multiplication operation is determined by increasing a quantity of rows, as shown in FIG. 9a. In FIG. 9a, a horizontal coordinate is a size of a matrix, and a vertical coordinate is duration required for completing computation.

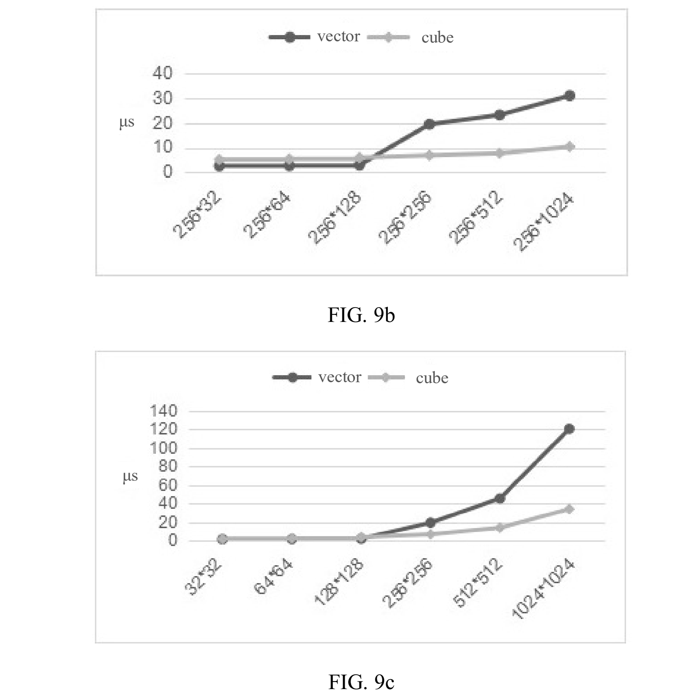

Further, a row of the original matrix is fixed, and a gain brought by converting row-wise matrix summation into a matrix multiplication operation is determined by increasing a quantity of columns, as shown in FIG. 9b. In FIG. 9b, a horizontal coordinate is a size of a matrix, and a vertical coordinate is duration required for completing computation.

Still further, rows and columns of the original matrix are increased in a same proportion, to determine a gain brought by converting row-wise matrix summation into a matrix multiplication operation, as shown in FIG. 9c. In FIG. 9c, a horizontal coordinate is a size of a matrix, and a vertical coordinate is duration required for completing computation.

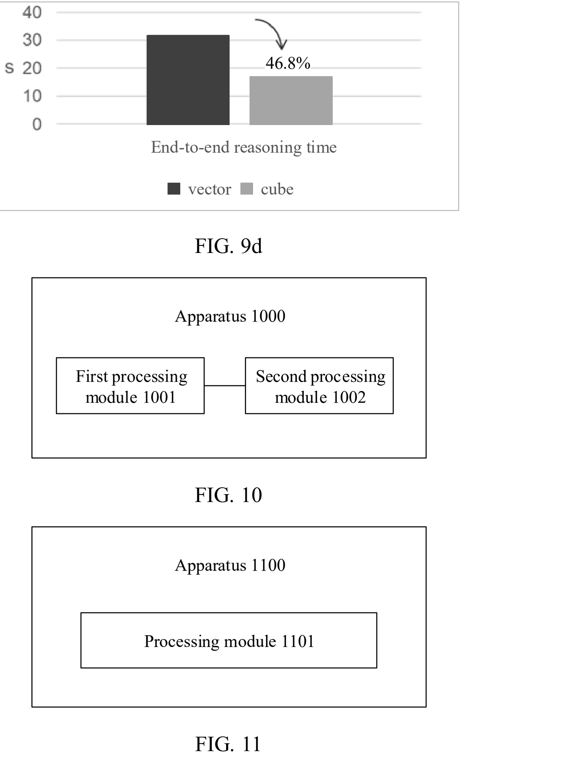

Finally, an optimized implementation of row-wise matrix summation is integrated into end-to-end reasoning of a Wukong-Huahua model, and an end-to-end reasoning performance gain brought by optimization is observed. A size of an accelerated matrix is (1024, 64), as shown in FIG. 9d. In FIG. 9d, a vertical coordinate is duration required for end-to-end reasoning.

In comparison with a case in which a vector operator is executed on a vector computation unit, in terms of single-operator evaluation, as a scale of an original matrix (a matrix in the vector operator) increases, a gain brought by converting row-wise matrix summation into a corresponding matrix multiplication operator for acceleration on a matrix computation unit is clearer. For example, when a size of the matrix is (1024,1024), duration of performing computation on the vector computation unit is 3.54 times duration of performing computation on the matrix computation unit. The method provided in this application is applied to end-to-end reasoning of a Wukong-Huahua model. In this way, a reasoning delay can be reduced by 46.8%, and a significant gain is brought to an actual service.

The foregoing describes the data processing system and the data processing method provided in this application with reference to FIG. 2 to FIG. 9d. The following describes apparatus embodiments in embodiments of this application with reference to FIG. 10 to FIG. 12. It should be understood that descriptions of the data processing system and the data processing method correspond to descriptions of the apparatus embodiments. Therefore, for a part that is not described in detail, refer to the foregoing descriptions.

FIG. 10 is a diagram of a structure of an apparatus according to this application. The apparatus 1000 includes a first processing module 1001 and a second processing module 1002. The apparatus 1000 may be a chip (for example, an AI chip or a system on a chip), or may be a terminal device, a module, a card, an intelligent small cell, a server, a server cluster, or the like. The first processing module 1001 and the second processing module 1002 may be a same module, for example, a CPU. The first processing module 1001 and the second processing module 1002 may alternatively be different modules. For example, the first processing module is a CPU, and the second processing module is an AI chip.

The first processing module 1001 is configured to determine whether a vector operator meets a condition. The vector operator is an operator executed by a vector computation unit of a chip. The first processing module 1001 is configured to convert the vector operator into a target matrix multiplication operator if the vector operator meets the condition, so that a matrix computation unit of the chip is capable of executing the target matrix multiplication operator. A first computation result of the target matrix multiplication operator is the same as a second computation result of the vector operator.

In a possible implementation, the first processing module 1001 is configured to determine whether the vector operator is a target vector operator. The target vector operator is an operator that is capable of being converted into a matrix multiplication operator, and a computation result of the target vector operator is the same as a computation result of the converted matrix multiplication operator. The first processing module 1001 is configured to determine, if the vector operator is the target vector operator, that the vector operator meets the condition.

In a possible implementation, the target vector operator includes at least one of row-wise matrix summation, column-wise matrix summation, scalar-matrix multiplication, a vector outer product operation, and a Hadamard product operation between a matrix and a vector.

In a possible implementation, the first processing module 1001 is configured to determine whether a first cost is less than a second cost. The first cost is predicted duration required for executing, by the matrix computation unit, the target matrix multiplication operator to complete computation, and the second cost is predicted duration required for executing, by the vector computation unit, the vector operator to complete computation. The first processing module 1001 is configured to: when the vector operator is the target vector operator and the first cost is less than the second cost, determine that the vector operator meets the condition.

In a possible implementation, the target matrix multiplication operator includes a constructed matrix, and the constructed matrix is a matrix that is constructed based on the vector operator and that makes the first computation result and the second computation result the same. The chip includes a buffer connected to the matrix computation unit, the buffer is configured to store a block matrix of the constructed matrix. The second processing module 1002 is configured to construct a target block matrix based on a size of the buffer and the vector operator. A size of the target block matrix is less than or equal to the size of the buffer, the target block matrix is a part of the constructed matrix, and not all values in the target block matrix are 0.

FIG. 11 is a diagram of a structure of another apparatus according to this application. The apparatus 1100 is applied to a chip, the chip includes a vector computation unit and a matrix computation unit, and the apparatus 1100 includes a processing module 1101. The processing module 1101 is configured to obtain a target vector operator. The processing module 1101 is configured to convert the target vector operator into a target matrix multiplication operator, so that the matrix computation unit is capable of executing the target matrix multiplication operator. A first computation result of the target matrix multiplication operator is the same as a second computation result of the target vector operator.

In a possible implementation, the target matrix multiplication operator includes a constructed matrix, and the constructed matrix is a matrix that is constructed based on the vector operator and that makes the first computation result and the second computation result the same. The chip includes a buffer connected to the matrix computation unit, the buffer is configured to store a block matrix of the constructed matrix. The processing module 1101 is configured to construct a target block matrix based on a size of the buffer and the vector operator. A size of the target block matrix is less than or equal to the size of the buffer, the target block matrix is a part of the constructed matrix, and not all values in the target block matrix are 0.

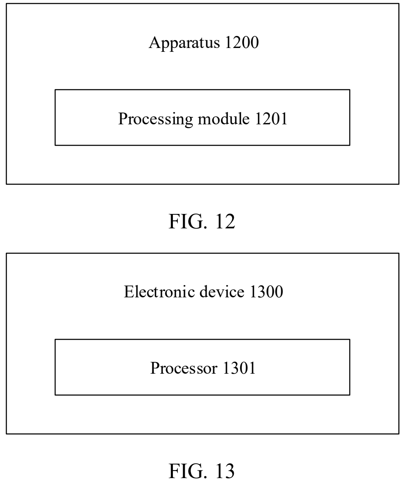

FIG. 12 is a diagram of a structure of another apparatus according to this application; The apparatus 1200 includes a processing module 1201. The apparatus 1200 is, for example, a CPU. The processing module 1201 is configured to determine whether a vector operator meets a condition. The vector operator is an operator executed by a vector computation unit of a chip. The processing module 1201 is configured to send an instruction when the vector operator meets the condition. The instruction instructs the chip to convert the vector operator into a matrix multiplication operator.

In a possible implementation, the processing module 1201 is configured to determine whether the vector operator is a target vector operator. The target vector operator is an operator that is capable of being converted into a matrix multiplication operator, and a computation result of the target vector operator is the same as a computation result of the converted matrix multiplication operator. The processing module 1201 is configured to determine, if the vector operator is the target vector operator, that the vector operator meets the condition.

In a possible implementation, the target vector operator includes at least one of row-wise matrix summation, column-wise matrix summation, scalar-matrix multiplication, a vector outer product operation, and a Hadamard product operation between a matrix and a vector.

In a possible implementation, the processing module 1201 is configured to determine whether a first cost is less than a second cost. The first cost is predicted duration required for executing, by the matrix computation unit, the target matrix multiplication operator to complete computation, and the second cost is predicted duration required for executing, by the vector computation unit, the vector operator to complete computation. The processing module 1201 is configured to: when the vector operator is the target vector operator and the first cost is less than the second cost, determine that the vector operator meets the condition.

FIG. 13 is a diagram of a structure of an electronic device according to this application. The electronic device 1300 includes a processor 1301, the processor 1301 is coupled to a memory, and the processor 1301 is configured to perform the data processing method in any one of the foregoing embodiments based on instructions stored in the memory. The electronic device 1300 may be a chip (for example, an AI chip or a system on a chip), or may be a device such as a terminal device, a module, a card, an intelligent small cell, a server, or a server cluster.

This application further provides a computer-readable storage medium, and the computer-readable storage medium stores a computer program. When the computer program is executed by a computer, the steps of the data processing method in any one of the foregoing method embodiments is implemented.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into the units is merely logical functional division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected according to an actual requirement, to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, all of the technical solutions of this application or the part of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

**Claims**

1.  A data processing method, wherein the method comprises:

   determining whether a vector operator meets a condition, wherein the vector operator is an operator executed by a vector computation unit of a chip; and

converting the vector operator into a target matrix multiplication operator if the vector operator meets the condition, so that a matrix computation unit of the chip is capable of executing the target matrix multiplication operator, wherein a first computation result of the target matrix multiplication operator is the same as a second computation result of the vector operator.

2. The method according to claim 1, wherein determining whether the vector operator meets the condition comprises:

determining whether the vector operator is a target vector operator, wherein the target vector operator is an operator that is capable of being converted into a matrix multiplication operator, and a computation result of the target vector operator is the same as a computation result of the converted matrix multiplication operator; and determining, if the vector operator is the target vector operator, that the vector operator meets the condition.

3. The method according to claim 2, wherein determining whether the vector operator meets the condition further comprises:

determining whether a first cost is less than a second cost, wherein the first cost is predicted duration required for executing, by the matrix computation unit, the target matrix multiplication operator to complete computation, and the second cost is predicted duration required for executing, by the vector computation unit, the vector operator to complete computation; and determining, if the vector operator is the target vector operator, that the vector operator meets the condition comprises: if the vector operator is the target vector operator and the first cost is less than the second cost, determining that the vector operator meets the condition.

4. The method according to claim 2 or 3, wherein the target vector operator comprises at least one of row-wise matrix summation, column-wise matrix summation, scalar-matrix multiplication, a vector outer product operation, and a Hadamard product operation between a matrix and a vector.

5. The method according to any one of claims 1 to 4, wherein the target matrix multiplication operator comprises a constructed matrix, and the constructed matrix is a matrix that is constructed based on the vector operator and that makes the first computation result and the second computation result the same.

6. The method according to claim 5, wherein the chip comprises a buffer connected to the matrix computation unit, the buffer is configured to store a block matrix of the constructed matrix, and converting the vector operator into the target matrix multiplication operator comprises:
constructing a target block matrix based on a size of the buffer and the vector operator, wherein a size of the target block matrix is less than or equal to the size of the buffer, the target block matrix is a part of the constructed matrix, and not all values in the target block matrix are 0.

7. A data processing method, wherein the method is applied to a chip, the chip comprises a vector computation unit and a matrix computation unit, and the method comprises:

obtaining a target vector operator;
converting the target vector operator into a target matrix multiplication operator, wherein a first computation result of the target matrix multiplication operator is the same as a second computation result of the target vector operator; and
executing the target matrix multiplication operator by using the matrix computation unit.

8. The method according to claim 7, wherein the target matrix multiplication operator comprises a constructed matrix, and the constructed matrix is a matrix that is constructed based on the target vector operator and that makes the first computation result and the second computation result the same.

9. The method according to claim 8, wherein the chip comprises a buffer connected to the matrix computation unit, the buffer is configured to store a block matrix of the constructed matrix, and converting the target vector operator into the target matrix multiplication operator comprises:
constructing a target block matrix based on a size of the buffer and the target vector operator, wherein a size of the target block matrix is less than or equal to the size of the buffer, the target block matrix is a part of the constructed matrix, and not all values in the target block matrix are 0.

10. A data processing method, wherein the method comprises:

determining whether a vector operator meets a condition, wherein the vector operator is an operator executed by a vector computation unit of a chip; and
sending an instruction if the vector operator meets the condition, wherein the instruction instructs the chip to convert the vector operator into a matrix multiplication operator.

11. The method according to claim 10, wherein determining whether the vector operator meets the condition comprises:

determining whether the vector operator is a target vector operator, wherein the target vector operator is an operator that is capable of being converted into a matrix multiplication operator, and a computation result of the target vector operator is the same as a computation result of the converted matrix multiplication operator; and
determining, if the vector operator is the target vector operator, that the vector operator meets the condition.

12. The method according to claim 11, wherein determining whether the vector operator meets the condition further comprises:

determining whether a first cost is less than a second cost, wherein the first cost is predicted duration required for executing, by the matrix computation unit, the target matrix multiplication operator to complete computation, and the second cost is predicted duration required for executing, by the vector computation unit, the vector operator to complete computation; and
determining, if the vector operator is the target vector operator, that the vector operator meets the condition comprises:
if the vector operator is the target vector operator and the first cost is less than the second cost, determining that the vector operator meets the condition.

13. An apparatus, wherein the apparatus comprises:

a first processing module, configured to determine whether a vector operator meets a condition, wherein the vector operator is an operator executed by a vector computation unit of a chip; and
a second processing module, configured to convert the vector operator into a target matrix multiplication operator if the vector operator meets the condition, so that a matrix computation unit of the chip is capable of executing the target matrix multiplication operator, wherein a first computation result of the target matrix multiplication operator is the same as a second computation result of the vector operator.

14. The apparatus according to claim 13, wherein

the first processing module is configured to determine whether the vector operator is a target vector operator, wherein the target vector operator is an operator that is capable of being converted into a matrix multiplication operator, and a computation result of the target vector operator is the same as a computation result of the converted matrix multiplication operator; and
the first processing module is configured to determine, if the vector operator is the target vector operator, that the vector operator meets the condition.

15. The apparatus according to claim 14, wherein

the first processing module is configured to determine whether a first cost is less than a second cost, wherein the first cost is predicted duration required for executing, by the matrix computation unit, the target matrix multiplication operator to complete computation, and the second cost is predicted duration required for executing, by the vector computation unit, the vector operator to complete computation; and
the first processing module is configured to: when the vector operator is the target vector operator and the first cost is less than the second cost, determine that the vector operator meets the condition.

16. The apparatus according to any one of claims 13 to 15, wherein the target matrix multiplication operator comprises a constructed matrix, the constructed matrix is a matrix that is constructed based on the vector operator and that makes the first computation result and the second computation result the same, the chip comprises a buffer connected to the matrix computation unit, and the buffer is configured to store a block matrix of the constructed matrix; and
the second processing module is configured to construct a target block matrix based on a size of the buffer and the vector operator, wherein a size of the target block matrix is less than or equal to the size of the buffer, the target block matrix is a part of the constructed matrix, and not all values in the target block matrix are 0.

17. An apparatus, wherein the apparatus is applied to a chip, the chip comprises a vector computation unit and a matrix computation unit, and the apparatus comprises:

a processing module, configured to obtain a target vector operator; and
the processing module is configured to convert the target vector operator into a target matrix multiplication operator, so that the matrix computation unit is capable of executing the target matrix multiplication operator, wherein a first computation result of the target matrix multiplication operator is the same as a second computation result of the target vector operator.

18. An apparatus, wherein the apparatus comprises:

a processing module, configured to determine whether a vector operator meets a condition, wherein the vector operator is an operator executed by a vector computation unit of a chip; and
the processing module is configured to send an instruction when the vector operator meets the condition, wherein the instruction instructs the chip to convert the vector operator into a matrix multiplication operator.

19. An electronic device, wherein the electronic device comprises a processor, the processor is coupled to a memory, and the processor is configured to perform, based on instructions stored in the memory, the data processing method according to any one of claims 1 to 12.

20. A computer-readable storage medium, comprising instructions, wherein when the computer-readable storage medium is run on a computer, the computer is enabled to perform the data processing method according to any one of claims 1 to 12.

FIG. 1

FIG. 2

EP 4 718 289 A1

FIG. 3

| Application layer | Artificial intelligence | High-performance computing | Database retrieval |
|---|---|---|---|
| Operator library | CANN | CUDA | Cublas |
| Diversified hardware | Huawei Ascend | NVIDIA GPU | Google TPU |

FIG. 4

Determine whether a vector operator meets a condition — S501

No

Yes

Convert the vector operator into a target matrix multiplication operator, where a first computation result of the target matrix multiplication operator is the same as a second computation result of the vector operator — S502

A matrix computation unit executes the target matrix multiplication operator — S503

A vector computation unit executes the vector operator — S504

FIG. 5

EP 4 718 289 A1

FIG. 6a

Vector operator

| | | | |
|---|---|---|---|
| $a_{11}$ | $a_{12}$ | $a_{13}$ | $a_{14}$ |
| $a_{21}$ | $a_{22}$ | $a_{23}$ | $a_{24}$ |
| $a_{31}$ | $a_{32}$ | $a_{33}$ | $a_{34}$ |
| $a_{41}$ | $a_{42}$ | $a_{43}$ | $a_{44}$ |

Column-wise summation

$=$

| | | | |
|---|---|---|---|
| $b_1$ | $b_2$ | $b_3$ | $b_4$ |

Computation result

Conversion

Constructed matrix

| | | | |
|---|---|---|---|
| 1 | 1 | 1 | 1 |
| 0 | 0 | 0 | 0 |
| 0 | 0 | 0 | 0 |
| 0 | 0 | 0 | 0 |

$\times$

| | | | |
|---|---|---|---|
| $a_{11}$ | $a_{12}$ | $a_{13}$ | $a_{14}$ |
| $a_{21}$ | $a_{22}$ | $a_{23}$ | $a_{24}$ |
| $a_{31}$ | $a_{32}$ | $a_{33}$ | $a_{34}$ |
| $a_{41}$ | $a_{42}$ | $a_{43}$ | $a_{44}$ |

$=$

Computation result

| | | | |
|---|---|---|---|
| $b_1$ | $b_2$ | $b_2$ | $b_2$ |
| 0 | 0 | 0 | 0 |
| 0 | 0 | 0 | 0 |
| 0 | 0 | 0 | 0 |

Target matrix multiplication operator

FIG. 6b

Vector operator            Computation result

| $a_{11}$ | $a_{12}$ | $a_{13}$ | $a_{14}$ |
|---|---|---|---|
| $a_{21}$ | $a_{22}$ | $a_{23}$ | $a_{24}$ |
| $a_{31}$ | $a_{32}$ | $a_{33}$ | $a_{34}$ |
| $a_{41}$ | $a_{42}$ | $a_{43}$ | $a_{44}$ |

$\bigcirc$

| $b_1$ |
|---|
| $b_2$ |
| $b_3$ |
| $b_4$ |

$=$

| $a_{11}b_1$ | $a_{12}b_1$ | $a_{13}b_1$ | $a_{14}b_1$ |
|---|---|---|---|
| $a_{21}b_2$ | $a_{22}b_2$ | $a_{23}b_2$ | $a_{24}b_2$ |
| $a_{31}b_3$ | $a_{32}b_3$ | $a_{33}b_3$ | $a_{34}b_3$ |
| $a_{41}b_4$ | $a_{42}b_4$ | $a_{43}b_4$ | $a_{44}b_4$ |

Constructed matrix     Conversion

| $b_1$ | 0 | 0 | 0 |
|---|---|---|---|
| 0 | $b_2$ | 0 | 0 |
| 0 | 0 | $b_3$ | 0 |
| 0 | 0 | 0 | $b_4$ |

$\times$

| $a_{11}$ | $a_{12}$ | $a_{13}$ | $a_{14}$ |
|---|---|---|---|
| $a_{21}$ | $a_{22}$ | $a_{23}$ | $a_{24}$ |
| $a_{31}$ | $a_{32}$ | $a_{33}$ | $a_{34}$ |
| $a_{41}$ | $a_{42}$ | $a_{43}$ | $a_{44}$ |

$=$

| $a_{11}b_1$ | $a_{12}b_1$ | $a_{13}b_1$ | $a_{14}b_1$ |
|---|---|---|---|
| $a_{21}b_2$ | $a_{22}b_2$ | $a_{23}b_2$ | $a_{24}b_2$ |
| $a_{31}b_3$ | $a_{32}b_3$ | $a_{33}b_3$ | $a_{34}b_3$ |
| $a_{41}b_4$ | $a_{42}b_4$ | $a_{43}b_4$ | $a_{44}b_4$ |

Target matrix multiplication operator       Computation result

FIG. 6c

| $a_{11}$ | $a_{12}$ | $a_{13}$ | $a_{14}$ |
|---|---|---|---|
| $a_{21}$ | $a_{22}$ | $a_{23}$ | $a_{24}$ |
| $a_{31}$ | $a_{32}$ | $a_{33}$ | $a_{34}$ |
| $a_{41}$ | $a_{42}$ | $a_{43}$ | $a_{44}$ |

$\bigcirc$

| $b_1$ | $b_2$ | $b_3$ | $b_4$ |
|---|---|---|---|

$=$

| $a_{11}b_1$ | $a_{12}b_2$ | $a_{13}b_3$ | $a_{14}b_4$ |
|---|---|---|---|
| $a_{21}b_1$ | $a_{22}b_2$ | $a_{23}b_3$ | $a_{24}b_4$ |
| $a_{31}b_1$ | $a_{32}b_2$ | $a_{33}b_3$ | $a_{34}b_4$ |
| $a_{41}b_1$ | $a_{42}b_2$ | $a_{43}b_3$ | $a_{44}b_4$ |

Vector operator

Computation result

$\Downarrow$ Conversion

Target matrix
multiplication operator

Constructed
matrix

Computation result

| $a_{11}$ | $a_{12}$ | $a_{13}$ | $a_{14}$ |
|---|---|---|---|
| $a_{21}$ | $a_{22}$ | $a_{23}$ | $a_{24}$ |
| $a_{31}$ | $a_{32}$ | $a_{33}$ | $a_{34}$ |
| $a_{41}$ | $a_{42}$ | $a_{43}$ | $a_{44}$ |

$\times$

| $b_1$ | 0 | 0 | 0 |
|---|---|---|---|
| 0 | $b_2$ | 0 | 0 |
| 0 | 0 | $b_3$ | 0 |
| 0 | 0 | 0 | $b_4$ |

$=$

| $a_{11}b_1$ | $a_{12}b_2$ | $a_{13}b_3$ | $a_{14}b_4$ |
|---|---|---|---|
| $a_{21}b_1$ | $a_{22}b_2$ | $a_{23}b_3$ | $a_{24}b_4$ |
| $a_{31}b_1$ | $a_{32}b_2$ | $a_{33}b_3$ | $a_{34}b_4$ |
| $a_{41}b_1$ | $a_{42}b_2$ | $a_{43}b_3$ | $a_{44}b_4$ |

FIG. 6d

Vector operator

Conversion

Constructed matrix

Target matrix multiplication operator

Computation result

FIG. 6e

FIG. 6f

FIG. 7

| Obtain a vector operator | S801 |

↓

| Obtain a first instruction, where the first instruction instructs an AI chip to convert the vector operator into a target matrix multiplication operator | S802 |

↓

| Obtain the target matrix multiplication operator based on the vector operator | S803 |

↓

| Execute the target matrix multiplication operator by using a matrix computation unit | S804 |

FIG. 8

FIG. 9a

FIG. 9b

FIG. 9c

FIG. 9d

FIG. 10

FIG. 11

Apparatus 1200

Processing module 1201

## FIG. 12

Electronic device 1300

Processor 1301

## FIG. 13

## INTERNATIONAL SEARCH REPORT

| International application No. |
| --- |
| **PCT/CN2024/083524** |

| A. | CLASSIFICATION OF SUBJECT MATTER |
| --- | --- |

G06F17/16(2006.01)i; G06N3/02(2006.01)i

According to International Patent Classification (IPC) or to both national classification and IPC

| B. | FIELDS SEARCHED |
| --- | --- |

Minimum documentation searched (classification system followed by classification symbols)

IPC:G06F G06N

Documentation searched other than minimum documentation to the extent that such documents are included in the fields searched

Electronic data base consulted during the international search (name of data base and, where practicable, search terms used)

CNABS; CNTXT; VEN; USTXT; ENTXTC; EPTXT; WOTXT; CNKI: 百度, BAIDU; IEEE: 处理器, 智能, 芯片, 神经网络, 达芬奇, 架构, 向量, 矢量, 矩阵, 张量, 乘法, 计算, 运算, 转换, 转化, 转变, 变换, process+, AI, chip?, neural network, davinci, framework?, vector?, matrix+, tensor?, cuda, cube?, comput+, transform+.

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 113704689 A (PEKING UNIVERSITY) 26 November 2021 (2021-11-26) description, paragraphs 38-44 | 1-20 |
| A | CN 113139648 A (ALIBABA GROUP HOLDING LTD.) 20 July 2021 (2021-07-20) entire document | 1-20 |
| A | CN 115185587 A (PENG CHENG LABORATORY) 14 October 2022 (2022-10-14) entire document | 1-20 |
| A | KR 20190093932 A (ELECTRONICS AND TELECOMMUNICATIONS RESEARCH INSTITUTE) 12 August 2019 (2019-08-12) entire document | 1-20 |
| A | US 2020364545 A1 (GENGHISCOMM HOLDINGS, LLC) 19 November 2020 (2020-11-19) entire document | 1-20 |
| A | WO 2023059215 A1 (HUAWEI TECHNOLOGIES CO., LTD. et al.) 13 April 2023 (2023-04-13) entire document | 1-20 |

☐ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **14 May 2024** | **04 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/083524**

| Patent document cited in search report | | | Publication date (day/month/year) | Patent family member(s) | | | Publication date (day/month/year) |
|---|---|---|---|---|---|---|---|
| CN | 113704689 | A | 26 November 2021 | CN | 113704689 | B | 11 November 2022 |
| CN | 113139648 | A | 20 July 2021 | US | 2021224185 | A1 | 22 July 2021 |
| | | | | US | 11669443 | B2 | 06 June 2023 |
| | | | | CN | 113139648 | B | 05 April 2024 |
| CN | 115185587 | A | 14 October 2022 | None | | | |
| KR | 20190093932 | A | 12 August 2019 | None | | | |
| US | 2020364545 | A1 | 19 November 2020 | WO | 2021118651 | A1 | 17 June 2021 |
| | | | | US | 11640522 | B2 | 02 May 2023 |
| WO | 2023059215 | A1 | 13 April 2023 | WO | 2023059215 | A8 | 25 January 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310746599